# EUROPÄISCHE PATENTSCHRIFT

(11) **EP 1 888 276 B1**
(45) Veröffentlichungstag und Bekanntmachung des Hinweises auf die Patenterteilung: **20.02.2013**
(21) Anmeldenummer: 06754214.2
(22) Anmeldetag: 08.06.2006
(51) Int. Cl.: B22F 5/08, B22F 7/06, F16H 55/08, B21H 5/02, F16H 55/06

(54) **GESINTERTES VERZAHNUNGSELEMENT MIT LOKAL-SELEKTIVER OBERFLÄCHENVERDICHTUNG**
SINTERED GEAR ELEMENT FEATURING LOCALLY SELECTIVE SURFACE COMPRESSION
ELEMENT D'ENDENTEMENT FRITTE A DENSIFICATION DE SURFACE LOCALEMENT SELECTIVE

(30) Priorität: 10.06.2005 DE 102005027048
(43) Veröffentlichungstag der Anmeldung: 20.02.2008
(73) Patentinhaber: GKN Sinter Metals Holding GmbH, 42477 Radevormwald (DE)
(72) Erfinder: KOTTHOFF, Gerhard, 42899 Remscheid (DE)
(74) Vertreter: Schulz, Björn
(86) Internationale Anmeldenummer: PCT/EP2006/005468
(87) Internationale Veröffentlichungsnummer: WO 2006/131349

(56) Entgegenhaltungen:
- US-A- 5 711 187
- GERHARD KOTTHOFF: "Neue Verfahren zur Tragfähigkeitssteigerung von gesinterten Zahnrädern" BERICHTE AUS DER PRODUKTIONSTECHNIK (WZL RWTH AACHEN), 2003, Seiten 1-153, XP001247665 Aachen

## Beschreibung

Die Erfindung betrifft ein Verfahren zur Herstellung eines oberflächenverdichteten metallenen Verzahnungselementes, welches ein verdichtetes Sintermaterial aufweist, eine entsprechende Verwendung einer Vorform und ein entsprechendes Verzahnungselement.

Gesinterte Verzahnungselemente wie beispielsweise pulvermetallurgisch hergestellte Zahnräder werden in weiten Bereichen eingesetzt Gesinterte Materialien weisen im Allgemeinen eine geringere Dichte im Vergleich zu konventionell geschmiedeten Materialien aus beispielsweise Stahl auf. Daher ist eine Oberflächenverdichtung eines gesinterten Werkstückes wünschenswert.

Aus der US 5,711,187 geht ein Verfahren zu Oberflächenverdichtung von Zahnrädern hervor. Vorgesehen ist ein Aufmaß auf Zahnflanken, in einem Zahnfuß oder auf Zahnflanken und im Zahnfuß des mittels Wälzverfahrens zu verdichtenden gesinterten Zahnrads.

Aufgabe der vorliegenden Erfindung ist es, eine Verbesserung eines Festigkeitsverlaufes eines metallenen Verzahnungselementes aufweisend ein Sintermaterial zu ermöglichen. Des Weiteren ist es Aufgabe der Erfindung, eine Auslegung von Verzahnungen aus Sintermaterial zu vereinfachen.

Diese Aufgabe wird durch ein Verfahren nach Anspruch 1 zur Herstellung eines oberflächenverdichteten metallenen Verzahnungselementes, durch eine Verwendung einer Vorform nach Anspruch 14 und durch ein Verzahnungselement nach Anspruch 17 gelöst. Vorteilhafte Ausgestaltungen und Weiterbildungen sind in den jeweiligen abhängigen Ansprüchen angegeben.

Bei einem erfindungsgemäßen Verfahren zur Herstellung eines oberflächengehärteten metallenen Verzahnungselementes, welches ein verdichtetes Sintermaterial mit einer jeweils unterschiedlich verdichteten Randschicht entlang einer Flanke und eines Zahngrundes aufweist, wird eine Vorform des Verzahnungselementes mit einem lokalselektiven unterschiedlichem Aufmaß entlang einer Flanke und eines Zahngrundes der Vorform bezogen auf ein Endmaß des Verzahnungselementes hergestellt und mittels wenigstens eines Walzwerkzeuges auf das Endmaß gewalzt, wobei das Verzahnungselement zumindest im Bereich wenigstens einer Flanke und eines Fußes eines Zahns des Verzahnungselementes zur Erzeugung einer verdichteten Randschicht an einer Oberfläche lokal variiert verdichtet wird, wobei im Zahngrund bereich das Aufmaß so gewählt wird, dass es ein lokales Minimum aufweist.

Ein Verzahnungselement ist dabei beispielsweise ein Zahnrad, eine Zahnstange, ein Nocken, ein P-Rotor, ein Zahnkranz, ein Kettenzahnrad oder dergleichen. Das verdichtete Sintermaterial wird insbesondere mit Verfahren der Pulvermetallurgie hergestellt. Beispielsweise wird ein Metallpulver unter einem Druck in Verbindung mit einer Wärmebehandlung gesintert. Des Weiteren wird beispielsweise Metallpulver in Verbindung mit Kunststoff spritzgegossen sowie insbesondere unter einem Druck vorzugsweise mit einer Wärmebehandlung gesintert. Für eine Formgebung eines Sinterwerkstückes wird insbesondere eine Sinterform verwendet, die zumindest nahezu das Endmaß des herzustellenden Verzahnungselementes aufweist. Bevorzugt wird als Vorform das direkt aus dem Sinterprozess resultierende Werkstück verwendet. In einer anderen Variante kann jedoch auch wenigstens ein weiterer Oberflächenbearbeitungsschritt nachgeschaltet werden. Die Vorform weist dabei ein Aufmaß auf, welches als Differenz zu einem Endmaß aufzufassen ist, wobei die Differenz vorzugsweise punktweise senkrecht zur Oberfläche definiert ist.

Als ein Walzwerkzeug wird beispielsweise eine Walze verwendet, die mit einer Verzahnung ausgestattet ist, die mit der Verzahnung des Verzahnungselements in Eingriff bringbar ist. Ein derartiges Walzwerkzeug wird insbesondere unter einem Druck auf einer Oberfläche des Verzahnungselementes abgewälzt. Bevorzugt werden insbesondere gleichzeitig zwei oder mehrere derartige Walzwerkzeuge verwendet. Beispielsweise kann ein herzustellendes Zahnrad mittig zwischen zwei Wälzwerkzeugen angeordnet werden. Durch Zustellung beider Wälzwerkzeuge kann sodann eine Oberflächenverdichtung des Sintermaterials der Verzahnung bewirkt werden. Allgemein geht ein derartiges Herstellungsverfahren zum Beispiel aus Takeya et al, "Surface Rolling of sintered gears", SAE 1982 World Congress, Technical Paper 820234 hervor. Auch aus DE 33 250 37, aus US 4,059,879, aus EP 0 552 272 A1, aus EP 1 268 102 A1, aus US 5,729,822, aus US 5,711,187, aus US 5,884,527, aus US 5,754,937, aus US 6,193,927, aus EP 0 600 421 A1, aus GB 2,250,227 gehen jeweils verschiedene Herstellungsverfahren, Sintermaterialien, Werkzeuge, Ablauf der Verdichtung und Vorrichtungen für gesinterte Verzahnungen hervor, die adaptiert an die Erfindung ebenfalls genutzt werden können. Auf die obigen Druckschriften wird entsprechend des Rahmens dieser Offenbarung verwiesen.

Beispielsweise kann auch ein erstes Walzwerkzeug unter einem ersten Druck im Wesentlichen zum Grobkonturwalzen und anschließend ein zweites Walzwerkzeug unter einem zweiten Druck zur Erzielung der gezielt einzustellenden Oberflächenverdichtung verwendet werden.

Das lokal-selektive Aufmaß ist so bemessen, dass das Verzahnungselement zumindest im Bereich wenigstens einer Flanke und eines Fußes eines Zahnes des Verzahnungselementes in einer Randschicht an einer Oberfläche lokal variiert verdichtet wird. Bevorzugt wird innerhalb der verdichteten Randschicht eine volle Dichte erreicht, wobei die volle Dichte bevorzugt bezogen auf eine Dichte eines vergleichbaren pulvergeschmiedeten Zahns zu verstehen ist. Beispielsweise weist eine Vorform aus einem Sinterwerkstoff in einem Kern eine Dichte von mindestens 6,8 d/cm³, vorzugsweise von mindestens 7,1 g/cm³ und insbesondere von mindestens 7,3 g/cm³ auf. In der verdichteten Randschicht weist die Vorform beispielsweise eine Dichte von zumindest 7,7 g/cm³, vorzugsweise von zumindest 7,8 g/cm³ auf, was der Dichte einer pulvergeschmiedeten Vorform aus dem gleichen Werkstoff entspricht. Besonders vorteilhaft wird dabei ein beanspruchungsgerechter Festigkeitsverlauf erzielt. Des Weiteren wird mit einem örtlich variablen und beanspruchungsgerechtem Dichteverlauf bevorzugt eine hoch beanspruchbare gesinterte Verzahnung bereitgestellt. Der Dichteverlauf kann insbesondere in den höher beanspruchten Bereichen einen größeren Dichtegrad über einen größeren Bereich aufweisen im Vergleich zu unmittelbar benachbarten Bereichen geringerer Belastung. Mittels einer Ermittlung eines optimierten Aufmasses lässt sich ein derartig hergestellte Verzahnung auch wirtschaftlich in wenigen Arbeitsschritten fertigen.

Gemäß einer Ausgestaltung wird die jeweils unterschiedlich verdichtete Randschicht Ober ein unterschiedliches Aufmaß entlang einer Flanke und/oder Zahngrund der Vorform miterzeugt. Beispielsweise ist vorgesehen, dass eine Tiefe der verdichteten Randschicht, jeweils senkrecht zur Oberfläche betrachtet, in etwa am Ort einer maximalen Beanspruchung ein Maximum der Dichte aufweist. Dieses kann beispielsweise auf halber Höhe des Zahnes sein und jeweils zum Zahnkopf und zum Zahnfuß stetig auf Null abnehmen. Insbesondere zur Vermeidung von Pittings wird beispielsweise vorgesehen, dass in einem Bereich zwischen 20% und 30%, insbesondere zwischen 23% und 25% unterhalb des Wälzkreises eine besonders hohe Verdichtung im Sintermaterial eingestellt wird. Es können jedoch auch andere Verläufe vorgesehen werden. Insbesondere wird bei einer Auslegung eines Verdichtungsverlaufes ein Kraftverlauf auf einer Zahnflanke des Verzahnungselementes in seinem verwendungsgemäßen Einsatzzweck berücksichtigt. Beispielsweise werden dazu die an Zähnen eines Zahnrades in einem Getriebe auftretenden Kräfte herangezogen und die daraus resultierenden Vergleichsspannungsverläufe unterhalb der Oberfläche herangezogen. Diese Vorgehensweise ist auch bei anderen Verzahnungen möglich.

Besonders vorteilhaft ist es, wenn ein Aufmaß auf einer ersten Flanke des Zahns anders gewählt wird als auf einer zweiten Flanke des Zahns. Dabei wird insbesondere eine Kraftübertragungsrichtung bei einem verwendungsgemäßen Einsatzzweck eines Verzahnungselementes berücksichtigt. Bei einem Zahnrad in einem Getriebe wird hierzu beispielsweise berücksichtigt, dass abhängig von einer Drehrichtung in Drehrichtung andere Kräfte an den Zahnflanken auftreten als entgegen der Drehrichtung. Des Weiteren kann eine unterschiedliche Verdichtung aufgrund einer Drehrichtung eines Walzwerkzeuges kompensiert werden. Bevorzugt werden die Aufmaße so gewählt, dass nach einem Verdichtungsprozess ein identischer Verdichtungsverlauf entlang der ersten und der zweiten Zahnflanke resultiert.

Beispielsweise zur Vermeidung von Spannungsrissen in einem Zahnfuß bzw. Zahngrundbereich wird eine lokal verdichtete Oberflächenschicht auch in diesen Bereichen angestrebt. Besonders zweckmäßig ist es, wenn in einem Zahngrund ein asymmetrisches Aufmaß gewählt wird. Beispielsweise weist ein linker Zahnfußbereich eine andere Verdichtungstiefe als ein rechter Zahnfuß auf. Insbesondere kann jeweils zwischen zwei Zähnen eine vorzugsweise stetige Variation einer Tiefe einer Randschicht durch eine entsprechende Variation des Aufmaßes bereitgestellt werden.

Vorzugsweise wird bei der Ausgestaltung einer Verzahnung ein unterschiedliches, insbesondere asymmetrisches Aufmass nicht nur bezüglich einer Flanke, sondern vorzugsweise bezüglich zweiter einander gegenüberliegender Flanken vorgesehen. Zusätzlich wird ein unterschiedliches Aufmass im Zahnfuß vorgesehen, das vorzugsweise asymmetrisch ist. Auch können Zahnflanken und Zahnfüße einer Verzahnung jeweils asymmetrisch sein. Als Aufmass ist hierbei nicht nur die zur Verfügung Stellung von zusätzlichem Material zu verstehen. Vielmehr gehört dazu ebenfalls ein Untermaß. Darunter ist zu verstehen, dass weniger Sintermaterial in einem Beeich vorgesehen ist, als in Bezug auf eine Endkontur nach einem Bearbeitungsschritt vorgesehen sein müsste. Das ermittelte Untermaß stellt beispielsweise sicher, dass bei Verdrängung von Sintermaterial keine unerwünschten Erhebungen entstehen. Das Untermaß stellt daher einen durch insbesondere Verdrängung von Sintermaterial aufzufüllenden Bereich einer Vorform mit einer Verzahnung dar.

Darüber hinaus besteht die Möglichkeit, unterschiedliche Eingriffswinkel an einem Zahn einer Verzahnung vorzusehen. So kann der Eingriffswinkel der einen Flanke des Zahn um zumindest 15% vom Eingriffswinkel der anderen Flanke des Zahns abweichen.

In einer Ausgestaltung ist vorgesehen, dass zumindest 20 µm unterhalb einer Oberfläche einer ersten Flanke des Zahns eine um 2 %, bis zumindest 15 % höhere Dichte als auf einer zweiten Flanke des Zahns auf gleicher Höhe erzeugt wird. Bevorzugt wird auf der ersten Flanke des Zahns eine Dichte erzielt, die zumindest in etwa der Dichte entspricht, die für ein pulvergeschmiedetes Verzahnungselement erzielt wird, wohingegen die zweite Flanke eine geringere Dichte aufweist. Beispielsweise wird auf der einen Flanke eine Dichte in einem Bereich zwischen 7,2 g/cm³ und 7,7g/cm³ eingestellt, während in dem entsprechenden Bereich der zweiten Flanke eine Dichte zwischen 7,5 g/cm³ und 7,82 g/cm³ eingestellt wird. Insbesondere werden damit wiederum beispielsweise drehrichtungsabhängigen unterschiedlichen Belastungen der beiden Zahnflanken Rechnung getragen. Bevorzugt wird dabei ein anforderungsgerechter Elastizitäts- und Härteverlauf erzielt. Weiter bevorzugt wird dadurch eine Geräuschentwicklung beispielsweise in einem Getriebe verringert.

Weiterhin ist vorgesehen, dass ein lokales Aufmaß auf einer ersten Flanke des Zahns um zumindest 10 % größer gewählt ist, als ein Aufmaß auf einer zweiten Flanke des Zahns auf gleicher Höhe. In einer ersten Variante wird dadurch beispielsweise erzielt, dass aufgrund unterschiedlicher Druckbeaufschlagung beim Verdichten in Abhängigkeit der Drehrichtung ein identischer Verdichtungsverlauf auf der ersten und der zweiten Zahnflanke erzielt wird. In einer weiteren Variante wird beispielsweise ein unterschiedlicher Verdichtungsverlauf auf der ersten und der zweiten Zahnflanke erzielt. Hierbei können insbesondere unterschiedliche maximalen Dichten, deren Tiefen wie aber auch deren Ort in Bezug auf die Höhe der Verzahnung gezielt eingestellt werden.

Besonders zweckmäßig ist es, wenn ein Betrag eines maximalen lokalen Aufmaßes wenigstens 15 µm, bevorzugt wenigstens 100 µm und besonders bevorzugt wenigstens 400 µm beträgt. Liegt die Dichte der Vorform in einem Bereich zwischen 7,2 g/cm³ und 7,5 g/cm³, wird bevorzugt ein maximales Aufmaß zwischen 20 und 150 µm vorgesehen. Liegt die Dichte der Vorform zwischen 6,7 g/cm³ und 7,2 g/cm³, wird bevorzugt ein maximales Aufmaß zwischen 50 µm und 500 µm verwendet. Ein Aufmaß kann dabei lokal auch negativ sein, wobei beispielsweise eine laterale Umverteilung von Material berücksichtigt wird. Eine laterale Umverteilung kann durch Fließen von Material infolge eines Walzvorganges erfolgen. Insbesondere kann ein zumindest lokal negatives Aufmaß vorgesehen sein, welches lokal unter dem Endmaß liegt. Das negative Aufmaß beträgt vorzugsweise maximal 100 µm. Gemäß einer Ausgestaltung beträgt das negative Aufmass maximal weniger als 50 µm und insbesondere weniger als 20 µm. Insbesondere liegt das maximale negative Aufmass in einem Bereich zwischen 100 µm und 20 µm.

Vorzugsweise wird eine Verdichtung erzielt, die zumindest in einem Bereich einer Zahnflanke der Verzahnung eine Tiefe zwischen 1 mm und 1,5 mm erreicht. Die Verdichtung im Zahnfuß kann hingegen geringer sein. Gemäß einer Ausgestaltung ist die maximale Tiefe der Verdichtung einer Zahnflanke um zumindest den Faktor 6 größer als eine maximale Tiefe einer Verdichtung in einem Bereich des zugehörigen Zahnfußes. Dieses erlaubt, dass die Verzahnung einerseits eine ausreichende Festigkeit hat, andererseits aber auch eine gewisse Verformbarkeit behält. Ein Zahnbruch wird dadurch vermieden.

In einer Ausgestaltung des Verfahrens ist vorgesehen, dass die Vorform und das Walzwerkzeug aufeinander abgewälzt werden, bis eine endgültig formgebende Bewegung zwischen dem dadurch hergestellten Verzahnungselement und dem Walzwerkzeug erzeugt wird. Dies wird beispielsweise zur Herstellung von miteinander in Eingriff stehenden Zahnrädern verwendet. Bevorzugt wird während des Abwälzvorganges mit dem Walzwerkzeug ein Abstand zwischen Walzwerkzeug und Vorform verringert. Entsprechend wird dazu insbesondere ein Wälzdruck eingestellt bzw. angepasst. Neben der Möglichkeit einer Kraftsteuerung kann auch eine Wegsteuerung an der Maschine verwirklicht sein. Darüber hinaus besteht die Möglichkeit, eine Kombination aus Kraft- und Wegsteuerung bei der Herstellung der Verzahnung vorzusehen. Dabei kann auch in einem Abschnitt der Herstellung eine reine Wegsteuerung erfolgen und in einem anderen Abschnitt der Herstellung eine reine Kraftsteuerung. Auch können sich diese mehrmals abwechseln.

In einer weiteren Ausgestaltung ist vorgesehen, dass mittels Walzbewegung zwischen der Vorform und dem Walzwerkzeug eine zykloidenförmige und/oder evolventenförmige Verzahnung entsteht.

Eine weitere Verbesserung einer Oberflächenhärtung kann insbesondere damit erzielt werden, dass das Verfahren zur Herstellung eines zumindest teilweise oberflächenverdichteten metallenen Verzahnungselementes einen thermischen und/oder chemischen Oberflächenhärtungsprozess umfasst.

In einer ersten Variante wird als thermischer und/oder chemischer Härtungsprozess beispielsweise eine Einsatzhärtung verwendet. Bevorzugt wird dabei neben einer Erhöhung der Härte ein Abbau von Verspannungen erzielt. In einer weiteren Variante wird beispielsweise ein Carbonitrierungsprozess verwendet. Des Weiteren kann ein Nitrier- beziehungsweise Nitrocaborierprozess sowie ein Borierprozess verwendet werden. Insbesondere wird bei diesen Prozessen in Verbindung mit einer Wärmebehandlung ebenfalls eine Verringerung einer Verspannung erzielt. Durch Einstellung des herrschenden Druckes kann ebenfalls Einfluß auf die Härtung genommen werden. Beispielsweise kann ein Vakuum eingestellt werden, insbesondere wenn eine Einsatzhärtung vorgenommen wird. Auch besteht die Möglichkeit, eine Induktionshärtung vorzunehmen.

Die Härtung wird gemäß einer Ausgestaltung nur partiell ausgeführt, beispielsweise nur im Bereich der Verzahnung vorgenommen.

In einer bevorzugten Variante ist vorgesehen, dass ein Verfahren zur Herstellung eines zumindest teilweise oberflächengehärteten metallenen Verzahnungselementes, welches ein verdichtetes Sintermaterial aufweist, die Schritte "Kaltes oder warmes Verpressen, Sintern, Maß- und Oberflächenverdichtungswalzen sowie Einsatzhärtung" umfasst. Beispielsweise erfolgt zunächst ein kaltes Verpressen eines Metallpulvers in einer Form, welche zumindest in etwa das Endmaß des herzustellenden Verzahnungselementes aufweist. In einem zweiten Schritt erfolgt beispielsweise der Sinterprozess unter Wärmeeinwirkung mit oder ohne Druckeinwirkung. Vorzugsweise daran anschließend erfolgt die Maß- und Oberflächenverdichtung mittels Walzen. Wie bereits weiter oben erwähnt erfolgt ein Maß- und Oberflächenverdichtungswalzen vorzugsweise gleichzeitig mittels wenigstens zweier Walzwerkzeuge. Daran anschließend kann schließlich die Härtung, insbesondere Einsatzhärtung erfolgen, die eine weitere Härtung der Oberfläche ermöglicht.

Weitere mögliche Verfahrensschritte bzw. Verfahrensabläufe wie auch nähere Angaben zu Werkstücken sind im folgenden beispielhaft angegeben. Die Verfahrensschritte sind jedoch auch mit anderen Materialien und erreichten Dichtewerten ausführbar. Die verwendbaren Sintermaterialien sind wie folgt allgemein im Rahmen der Erfindung nutzbar, wobei beispielhaft verwendbare Materialen angegeben werden:
- gemischte Pulver (admixed powders): Zum Beispiel Eisenpulver wird mit anderen vorzugsweise elementaren Pulvern gemischt. Zum Beispiel:
   Ancorsteel 1000+1,5-3,5 w/o Cu + 0,6-1,1 w/o Graphit + 0,5-1,2 w/o Schmiermittel Ancorsteel 1000B+1,5-2,2 w/o Ni + 0,4-0,9 w/o Graphit + 0,6-1,1 w/o Schmiermittel
- teilweise legierte Pulver (partially alloyed, diffusion alloyed powders): Ein Pulver bei dem der oder die Legierungsbestandteile metallurgisch mit elementarem Pulver oder vorlegiertem Pulver verbunden sind. Zum Beispiel: Distaloy AB, Distaloy 4600A, Distaloy AE, Distaloy 4800A
- vorlegierte Pulver (pre-alloyed powders): Pulver aus zwei oder mehr Elementen, die während der Pulverherstellung legiert werden, wobei die Pulverpartikel gleichverteilt werden. Zum Beispiel: Ancorsteel 4600V, Ancorsteel 2000, Ancorsteel 86, Ancorsteel 150HP
- Hybridlegierung (hybrid alloy): vorlegierte oder partiell legierte Pulver mit elementaren oder eisenlegierten Zugaben, die vermischt werden, um die gewünschte Materialzusammenstellung zu erhalten. Zum Beispiel:
   Ancorsteel 85P+1,5-2,5 w/o Ni + 0,4-0,8 w/o Graphit + 0,55-1,1 w/o Schmierzusatz Distaloy AE + 1,5-2,5 w/o NI + 0,4-0,8 w/o Graphit + 0,55-0,95 Schmierzusatz Ancorsteel 85HP + 1,1-1,6 w/o FeMn + 0,35-0,65 w/o Graphit + 0,6-0,95 Schmierzusatz

1. Das Werkstück weist eine Kerndichte zwischen 6,5 und 7,5 g/cm³ auf. Die Oberflächendichte beträgt mehr als 7,5 g/cm³. Eine maximale Dichte wird bis zu einer Tiefe von 0,1 mm erzeugt.
   Ausgangsmaterialien für die Vorform sind sintermetallische Pulver, insbesondere vorlegierte Materialien, partiell legierte Materialien oder Hybridlegierungen.
   Mit einem vorlegiertem Material wird ein Kaltverpressen, ein Sintern in einem Temperaturbereich zwischen 1100°C und 1150°C, ein Oberflächenverdichten, ein Einsatzhärten und ein anschließendes Schleifen vorgenommen, um eine Endform eines Werkstücks mit Verzahnung zu erzielen.
   Mit einem partiell legierten metallischem Sintermaterial wird ein Warmpressen bei einer Pressentemperatur in einem Bereich zwischen 50°C und 80°C, ein Hochtemperatursintem in einem Bereich vorzugsweise zwischen 1250°C und 1280°C, ein Oberflächenverdichten, ein anschließendes Vakuum-Einsatzhärten und ein Honen durchgeführt, um eine Endform eines Werkstücks mit Verzahnung zu erzielen.
   Mit einem Sintermaterial aufweisen eine Hybridlegierung wird ein Warmpressen ausgeführt, bei dem vorzugsweise das Pulver und das Werkzeug erhitzt sind. Vorzugsweise sind diese in einem Bereich zwischen 120°C und 150° aufgeheizt. Anschließend erfolgte ein Sinterschritt, beispielsweise als Hochtemperatursintem, ein Oberflächenverdichten und anschließend Induktionshärten. Eine Nachbehandlung kann beispielsweise entfallen.
2. Die Vorform ist pulvergeschmiedet. Diese Vorform wird zumindest teilweise im Bereich der Zahnflanken und/oder des Zahnfußes oberflächenverdichtet. Eine Kerndichte des Werkstücks beträgt zwischen 5,7 g/cm³ und 7,7 g/cm³. Eine Oberflächendichte im Bereich der beträgt mehr als 7,8 g/cm³, wobei vorzugsweise in diesem Bereich alle verbliebenen Poren an der Oberfläche verschlossen sind. Es kann jedoch auch eine Maximaldichte bis zu einer Tiefe von 1,5 mm erzeugt werden.
   Ein Herstellungsverfahren kann wie folgt ablaufen: Wahl des Pulvermaterials, Kaltpressen des Pulvermaterials, Sintern vorzugsweise mit einer Temperatur um ca. 1120°C, anschließen Schmieden, vorzugsweise bei einer Temperatur um die 1000°C, eventuelles Entfernen einer Oxidationsschicht, Oberflächenverdichten insbesondere durch Wälzen, Oberflächenhärten, insbesondere Einsatzhärten, und eventuelles anschließendes partielles Schleifen auf eine Endkontur. Das Verfahren kann ganz oder teilweise in einer Fertigungstrasse ablaufen.
   Eine weitere Ausgestaltung sieht vor, dass beim Oberflächenhärten ein Vakuum-Einsatzhärten ausgeführt wird, an den sich ein Honschritt für partielle Bereiche der Verzahnung anschließen.
3. Insbesondere für die Produktion von Rotoren und Ölpumpenräder wird eine Vorform aus einem aluminiumhaltigen Material im Bereich der Zahnflanken und/oder der Zahnfüße oberflächenverdichtet. Beim Oberflächenverdichten wird insbesondere eine Endform der Verzahnung erzielt. Die Kerndichte des Werkstücks beträgt vorzugsweise zwischen 2, 6 g/cm³ und 2,8 g/cm³.
   Das Sintermaterial wird beispielsweise warmgepresst, beispielsweise bei einer Temperatur zwischen 40°C und 65°C, anschließend entwachst, beispielsweise bei einer Temperatur von mehr als 400°C, insbesondere in einem Temperaturbereich zwischen 420°C und 440°C dann gesintert, beispielsweise in einem Temperaturbereich oberhalb von 550°, insbesondere in einem Temperaturbereich zwischen 600°C und 630°C, dann homogenisiert und gekühlt , beispielsweise auf eine Temperatur zwischen 480°C und 535°C, wobei anschließend ein Oberflächenverdichten insbesondere durch Walzen erfolgt. Anschließend kann eine Aushärtung erfolgen, beispielsweise in einem Temperaturbereich zwischen 120°C und 185°C für einen Zeitraum zwischen 6 h und 24 h.
4. Die Vorform wird vorzugsweise entlang der Zahnflanke und des Zahnfußes verdichtet, wobei insbesondere zwei Walzwerkzeuge eingesetzt werden, in deren Mitte die Vorform drehbar angeordnet wird. Eine Kerndichte des Werkstücks beträgt je nach Material vorzugsweise zwischen 7,2 g/cm³ und 7,5 g/cm³, eine Oberflächendichte ist materialabhängig zumindest abschnittsweise größer als 7,8 g/cm³. Eine maximale Dichte ist insbesondere bis zu einer Tiefe von 1 mm vorliegend, eventuell auch darüber hinaus.
   Von den Herstellungsschritten wird gemäß einer Ausgestaltung vorgeschlagen, vorlegiertes Material kalt zu verpressen, anschließend zu sintern, insbesondere in einem Temperaturbereich zwischen. 1100°C und 1150°C, eine Oberflächenverdichtung durchzuführen, eine Härtung auszuführen und die Oberfläche partiell eventuell zu schleifen.
   Eine weitere Ausgestaltung sieht vor, ein partiell legiertes Sintermaterial warm zu verpressen, insbesondere in einem Temperaturbereich zwischen 50°C und 90°C, ein Hochtemperatursintem auszuführen, insbesondere in einem Temperaturbereich zwischen 1240°C und 1290°C, eine Oberflächenverdichtung durchzuführen, eine Vakuum-Einsatzhärtung vorzunehmen und eventuell anschließend zu honen.
   Eine andere Ausgestaltung sieht vor, eine Hybridlegierung heiß zu verpressen, wobei das Pulver und das Presswerkzeug vorzugsweise in einem Temperaturbereich zwischen 120°C und 160°C aufgewärmt sind. Nach einem Sinterschritt erfolgt eine Oberflächenverdichtung, an die sich eine Härtung, vorzugsweise eine Induktionshärtung anschließt.
5. Weiterhin besteht die Möglichkeit, das einem Vorsintern ein Oberflächenverdichten nachfolgt und dann wiederum ein Nachsintern als Verfahrensschritt bei der Herstellung eines Werkstückes mit Verzahnung vorgesehen ist. Das Vorsintern kann beispielsweise in einem Temperaturbereich zwischen 650°C bis 950°C erfolgen. Das Nachsintem kann beispielsweise bei einer für das Material üblichen Sintertemperatur erfolgen, zum Beispiel zwischen 1050°C und 1180°C. Auch besteht die Möglichkeit der Hochtemperatursinterung, zum Beispiel im Bereich zwischen 1250°C und 1280°C. Hiernach kann sich optional ein Härten und/oder eine Nachbearbeitung anschließen, zum Beispiel ein Honen oder auch ein Schleifen.
   Das vorhergehende Verpressen kann kalt, warm oder heiß erfolgen, wobei bei letzterem vorzugsweise das Presswerkzeug und das Pulver aufgeheizt sind. Beispielsweise erfolgt das Heizpressen in einem Temperaturbereich zwischen 120°C und 160°C.
6. Eine Weiterbildung sieht vor, dass einem Nachsinterschritt ein Sinterhärten nachfolgt. Optional kann sich daran ein Schleifen oder Honen anschließen.
7. Ein weiteres Herstellungsverfahren sieht vor, die Vorform bei einer Temperatur zu verdichten, die oberhalb von 150°C liegt, insbesondere über 500°C. Beispielsweise kann die Vorform direkt von einem Sinterofen in eine Maschine zur Oberflächenverdichtung geführt werden. Dabei kann die Vorform eine Temperatur aufweisen, die beispielsweise oberhalb von 600°C liegt, insbesondere auch über 800°C beträgt. Vorzugsweise werden das oder die Werkzeuge zur Oberflächenverdichtung beheizt, zum Beispiel auf eine Temperatur von etwa 150°C. Gemäß einer anderen Ausgestaltung ist das Werkzeug zur Oberflächenverdichtung gekühlt, vorzugsweise durch eine im Inneren des Werkzeugs verlaufende Kühlung.
8. Ein weiteres Herstellungsverfahren sieht vor, dass eine Oberflächenverdichtung erfolgt, während die Vorform zumindest partiell beheizt wird. Insbesondere erfolgt die Beheizung auf eine Temperatur, die das Oberflächenverdichten vereinfacht. Vorzugsweise wird hierfür eine Induktionsbeheizung eingesetzt. Anschließend erfolgt ein rasches Kühlen, um eine martensitische Struktur zu schaffen. Auf diese Weise kann beispielsweise ein Ausform-Prozess mit einer Oberflächenverdichtung kombiniert werden.

Eine weitere Ausbildung sieht vor, dass eine Oberflächenverdichtung mit unterschiedlichsten Verfahren ausführbar. Eine Ausgestaltung sieht insbesondere vor, dass in einem ersten Bereich die Oberflächenverdichtung mit einem anderen Verfahren ausgeführt wird als in einem zweiten, anderen Bereich. Als Verfahren können dabei eine Strahlverfestigung, ein Kugelstrahlen, eine Verdichtung mittels einer Kugel, mittels einer Walze oder mittels eines anderen rotierbaren Körpers, mittels zahnförmig gestalteter Werkzeuge, insbesondere Walzwerkzeuge und ähnliches zum Einsatz kommen. Diese Verfahren sind auch jeweils einzeln getrennt voneinander geeignet, eine notwendige Oberflächenverdichtung zu erlauben.

Beispielsweise wird der Zahnfuß gar nicht oder nur leicht mit einem Werkzeug verdichtet, mit dem auch die Zahnflanke verdichtet wird. Es besteht die Möglichkeit, die Oberfläche in einem Abschnitt so weit zu verdichten, dass nur die Poren an der Oberfläche verschlossen sind. Anschließend kann der Zahnfuß mit einem anderen Werkzeug beziehungsweise Oberflächenverdichtungsverfahren bearbeitet werden. Insbesondere kann darüber eine unterschiedliche Oberflächenverdichtung entlang der Zahnflanke im Vergleich zum Zahnfuß erreicht werden. Beispielsweise lassen sich so unterschiedliche Oberflächenqualitäten, beispielsweise bezüglich der Rauhigkeit, einstellen. Auch kann die maximale Oberflächenvertiefung unterschiedlich aufgrund der verschiedenen Techniken sein. Weiterhin besteht die Möglichkeit, dass das gesamte Werkstück mit der Verzahnung eine Oberflächenverdichtung erhält, so zum Beispiel beim Oberflächenstrahlen. Auf diese Weise lassen sich insbesondere auch aluminiumhaltige Sintermaterialien oder andere oxidbildende Sintermaterialien bearbeiten, da mit der Oberflächenverdichtung zusätzlich auch ein Entfernen einer Oxidschicht ermöglich werden kann.

Die Erfindung betrifft weiterhin eine Vervendung eine Vorform in einem Verfahren gemäß Anspruch 14 zur Herstellung eines oberflächengehärteten metallenen Verzahnungselementes, welches ein verdichtetes Sintermaterial aufweist, wobei eine erste und eine zweite Flanke eines Zahns jeweils voneinander abweichende asymmetrische Aufmaße aufweisen wobei im Zahngrundbereich das Aufmaß ein lokales Minimum aufweist. Des Weiteren ist auch vorgesehen, dass ein erster und ein zweiter Fußbereich eines Zahnes voneinander abweichende, insbesondere asymmetrische Aufmaße aufweisen.

Weiter betrifft die Erfindung ein Verzahnungselement mit einem metallischen Sinterwerkstoff gemäß Anspruche 17, wobei das Verzahnungselement zumindest im Bereich wenigstens einer Flanke und eines Fußes eines Zahnes des Verzahnungselementes eine lokal variierte Verdichtung aufweist und eine Tiefe einer verchichteten Randschicht im Fußbereich geringer ist als auf einer Zahnflanke. Bevorzugt wird dadurch eine für viele Anwendungen zweckmäßige Elastizität des pulvermetallurgischen Materials in Verbindung mit einer Oberflächenhärtung ermöglicht. Besonders bevorzugt wird beispielsweise bei Getriebezahnrädern eine Geräuschreduktion bei der Kraftübertragung ermöglicht und gleichzeitig eine gute Verschleißbeständigkeit bereitgestellt.

In einer ersten Variante ist vorgesehen, dass das Verzahnungselement ein gradverzahntes Zahnrad ist.

Insbesondere für eine verbesserte Kraftübertragung wie auch zur Geräuschreduzierung zwischen Zahnrädern ist in einer weiteren Variante vorgesehen, dass das Verzahnungselement ein schräg verzahntes Zahnrad ist. Des Weiteren kann in einer anderen Variante auch eine Kegelzahnrad vorgesehen sein. Entsprechend der weiter oben angeführten Beschreibung ist es zweckmäßig, wenn einander gegenüberliegende Flanken von Zähnen eines Verzahnungselementes eine asymmetrische Verdichtung aufweisen.

Des Weiteren ist es zweckmäßig, wenn eine asymmetrische Verdichtung in einem Fußbereich vorliegt Diese Verdichtung ist dabei insbesondere an bei einem verwendungsgemäßem Einsatz auftretende Kräfte angepasst. Zur Vermeidung von Spannungsanrissen ist insbesondere vorgesehen, dass die Tiefe der lokal verdichteten Randschicht nur so hoch ist, dass noch eine ausreichende Elastizität bzw. Steifigkeit des Zahns gewährleistet wird. Besonders bevorzugt ist die Tiefe der verdichteten Randschicht im Fußbereich geringer als auf einer Zahnflanke.

Für ein Material eines Verzahnungselementes können verschiedene Zusammensetzungen vorgesehen werden. In einer ersten Variante ist ein Eisenwerkstoff als Hauptbestandteil des Sinterwerkstoffes und wenigstens ein Legierungsbestandteil aus der Gruppe Kohlenstoff, Molybdän, Nickel, Kupfer, Mangan, Chrom und Vanadium ausgewählt. Eine Eisenlegierung ist beispielsweise Fe -1,0 Cr -0,3 V +0,2 bezogen auf eine Referenz 15CrNiMo6. Eine weitere Eisenlegierung ist beispielsweise Fe -1,5 Mo +0,2C bezogen auf 20MnCr5. Des Weiteren ist beispielsweise als eisenhaltige Legierung Fe -3,5 Mo bezogen auf 16MnCr5 vorgesehen. Ebenso kann beispielsweise die Legierung C 0,2% Cr 0,5% Mn 0,5% Mo 0,5%, wobei der Rest Eisen und Verunreinigung beinhaltet, verwendet werden. Daneben können weitere Zusammensetzungen vorgesehen sein.

Vorzugsweise für eine Verringerung eines Gewichtes eines Verzahnungselementes ist vorgesehen, dass als Hauptbestandteil des Sinterwerkstoffes Aluminium oder Magnesium ausgewählt ist. Gemäß einem Aspekt der Erfindung ist vorgesehen, dass eine oberflächenverdichtete Verzahnung aus Sintermaterial mindestens 80% Aluminium aufweist sowie zumindest Kupfer und Magnesium als weitere Sintermaterialien. Eine erste Ausgestaltung sieht vor, dass zusätzlich Silizium als Sintermaterial genutzt wird. Beispielsweise kann Silizium in einem Bereich von etwa 0,45% bis etwa 0,8%, vorzugsweise zwischen 0,6% und 0,75 %. Silizium kann jedoch auch in einem höheren Bereich vorliegen, zum Beispiel zwischen 13% und 17%, insbesondere zwischen 14,5% und 15,5%. Ist der Siliziumanteil höher, wird der Kupferanteil am Sintermaterial verringert So kann eine erste Mischung beispielsweise Kupfer mit 4% bis 5% Anteil, Silizium mit 0,45% bis etwa 0,8% Anteil, Magnesium mit etwa 0,35% bis 0,7% Anteil und den Rest zumindest hauptsächlich Aluminium aufweisen. Zusätzlich wird vorzugsweise ein Presshilfsmittel hinzugefügt. Dieses kann einen Anteil zwischen 0,8 und 1,8% aufweisen. Beispielsweise kann ein Wachs, insbesondere Amidwachs hierfür genutzt werden. Eine zweite Mischung kann beispielsweise Kupfer mit 2,2% bis 3% Anteil, Silizium mit 13% bis etwa 17% Anteil, Magnesium mit etwa 0,4% bis 0,9% Anteil und den Rest zumindest hauptsächlich Aluminium aufweisen. Ebenfalls kann ein Presshilfsmittel so wie oben beispielhaft angegeben Verwendung finden. Nach einer Oberflächenverdichtung weist zumindest ein Bereich der Verzahnung eine Dichte von beispielsweise mehr als 2,5g/cm³ vorzugsweise bis zur Maximaldichte auf. Vorzugsweise weist ein derartig hergestelltes Werkstück mit einer Verzahnung eine Zugfestigkeit von mindestens 240 N/mm² und eine Härte von mindestens 90HB auf. Ist der Silizium höher, kann die Dichte insbesondere auch mehr als 2,6 g/cm³ betragen.

Eine zweite Ausgestaltung sieht vor, dass zusätzlich zumindest Zink als Sintermaterial neben Kupfer und Magnesium als Zusätze und Aluminium genutzt wird. Vorzugsweise hat Kupfer einen Anteil in einem Bereich zwischen 1,2% und 2,1%, Insbesondere zwischen 1,5% und 1,65%, Magnesium zwischen 1,9% und 3,1%, vorzugsweise zwischen 2,45% und 2,65%, Zink zwischen 4,7% und 6,1%, insbesondere zwischen 2,3% und 5,55%. Der Rest ist zumindest hauptsächlich Aluminium. Zusätzlich kann auch hier ein Presshilfsmittel wie oben beschrieben eingesetzt werden. Ein aus dieser Mischung hergestelltes Werkstück mit einer Verzahnung weist vorzugsweise nach der Oberflächenverdichtung zumindest einen Bereich der Verzahnung auf, bei dem eine Dichte von zumindest 2,58 g/cm³ bis zur Maximaldichte verläuft. Vorzugsweise weist ein derartig hergestelltes Werkstück mit einer Verzahnung eine Zugfestigkeit von mindestens 280 N/mm² und eine Härte von mindestens 120HB auf.

Besonders zweckmäßig ist es, wenn ein Verzahnungselement mit einem weiteren funktionalen Bauteil, insbesondere einer Welle oder einem weiteren Zahnrad, versintert ist. Insbesondere wird dadurch eine Einhaltung eines präzisen Arbeitsabstandes zwischen mehreren Verzahnungselementen, beispielsweise in einem Getriebe, erleichtert.

In einer weiteren Ausgestaltung ist vorgesehen, dass das Verzahnungselement Bestandteil einer Pumpe ist. Beispielsweise handelt es sich um eine evolventisches Zahnrad, welches mit einem weiteren evolventischen Zahnrad in Eingriff gebracht ist.

Des Weiteren wird eine Vorrichtung zur Herstellung eines zumindest teilweise oberflächenverdichteten Verzahnungselementes insbesondere zur Durchführung eines oben beschriebenen Verfahrens mit einer an ein unterschiedliches Aufmaß angepassten Werkzeugsteuerung offenbart. Die Vorrichtung umfasst dabei insbesondere wenigstens ein Walzwerkzeug, welches bevorzugt mit Hilfe der angepassten Werkzeugsteuerung vorzugsweise unter einem angepassten Druck und/oder gesteuertem Weg in einem angepassten Eingriff auf die Vorform einwirken kann. Insbesondere umfasst die Vorrichtung ein Walzwerkzeug mit einer verzahnten Oberfläche, welche mit der Verzahnung des Verzahnungselementes in Eingriff bringbar und darauf abwälzbar ist.

Weiterhin ist eine vorrichtung zur Herstellung eines zumindest teilweise oberflächengehärteten Verzahnungselementes aus einer zumindest in einem Oberflächenbereich aus einem Sinterwerkstoff bestehenden Vorform offenbart, wobei die Vorrichtung ein Werkzeug umfasst, welches eine Kompensation unterschiedlicher Aufmaße bei einer ersten und einer zweiten Flanke eines mittels Wälzbewegung zu verdichtenden Zahns der Vorform aufweist. Das Walzwerkzeug kann dabei eine für die Formgebung notwendige Kontur, beispielsweise eine evolventische Verzahnung, nur auf einer Flanke oder auf beiden Flanken eines Zahnes aufweisen. In einer anderen Variante ist jedoch auch vorgesehen, dass auf jeweils einer ersten und einer zweiten Flanke eines Zahnes der Verzahnung des Walzwerkzeugs jeweils voneinander abweichende Aufmaße vorhanden sind. Dieses kann beispielsweise eine unterschiedliche evolventische Verzahnung sein.

Des weiteren wird ein Verfahren zur Auslegung eines Aufmaßes zur Erzielung einer Oberflächenverdichtung eines sintermetallenen Verzahnungselementes bei einem Wälzvorgang offenbart, wobei das Aufmaß iterativ ermittelt wird. In einem ersten Schritt wird beispielsweise eine Geometrie sowie insbesondere ein Drehmoment und/oder eine Druckverteilung vorgegeben. In einem weiteren Schritt wird beispielsweise eine Auslegung eines Walzwerkzeuges definiert. Des Weiteren wird eine Vorform mit einem lokal definierten Aufmaß ermittelt. Eine Auswahl kann beispielsweise anhand von Datenbibliotheken erfolgen. Eine derartige Datenbibliothek enthält beispielsweise anhand verschiedener Parameter ermittelte experimentelle Dichteverläufe. Des Weiteren kann eine Simulation des Verdichtungs- bzw. Wälzvorganges erfolgen. Dazu wird beispielsweise die Kinematik des Abwälzvorganges in Verbindung mit einer Simulation elastischer und plastischer Eigenschaften der Vorform sowie gegebenenfalls des Walzwerkzeuges simuliert. Für die Simulation der elastischen bzw. plastischen Eigenschaften der Vorform wird beispielsweise auf Modelle der Kontinuumsmechanik in Verbindung mit einer diskreten Lösung mittels beispielsweise Finite-Elemente- bzw. Finite-Volumen-Methoden zurückgegriffen.

In einer bevorzugten Ausgestaltung ist vorgesehen, dass eine Geometrie eines Wälzwerkzeuges iterativ unter Berücksichtigung des Aufmaßes ermittelt wird. Beispielsweise kann ein Aufmaß einer evolventischen Verzahnung des Wälzwerkzeuges ermittelt werden. Entsprechend kann ein Aufmaß für eine andere als eine evolventische Verzahnung ermittelt werden.

In einer besonders bevorzugten Ausgestaltung ist vorgesehen, dass in einem ersten Schritt ein zumindest in einem Bereich einer Flanke eines Zahns lokal variierte, zumindest punktweise definierbares Aufmaß eines Vorform des Verzahnungselementes anhand wenigstens einer Konstruktionsvorgabe automatisch generiert wird, in einem zweiten Schritt eine Geometrie eines Walzwerkzeuges automatisch generiert wird, in einem dritten Schritt ein Wälzprozess und ein dabei erzeugter lokaler Verlauf einer Verdichtung zumindest einer Randschicht des Verzahnungselementes simuliert wird und in einem vierten Schritt eine automatische Bewertung des erzeugten Verlaufes der Verdichtung mit einer Vorgabe verglichen wird sowie gegebenenfalls das Verfahren ab dem ersten Schritt unter Anwendung wenigstens einer Variation zur Optimierung wiederholt wird, bis ein Abbruchkriterium erfüllt ist. Die Variation erfolgt dabei beispielsweise mit Hilfe eines Optimierungsverfahrens. Ein Abbruchkriterium ist beispielsweise eine Toleranz zwischen gewünschtem Dichteverlauf und in der Simulation erzieltem Dichteverlauf. Des Weiteren kann ein Abbruchkriterium auch ein Überschreiten einer vorgebbaren Anzahl von iterationen sein.

Besonders zweckmäßig ist es, wenn die Konstruktionsvorgabe aus der Gruppe Materialdichte, Geometrie, Drehmoment und Druckverteilung ausgewählt ist. Das Drehmoment ist hierbei als das bei dem verwendungsgemäßen Einsatzzweck eines Verzahnungselementes auftretendes Drehmoment aufzufassen.

Insbesondere zur Vermeidung von Materialanrissen ist es zweckmäßig, wenn eine Materialspannung zumindest im Bereich der Verdichtung simuliert und insbesondere zur Bewertung herangezogen wird. Bevorzugt wird dadurch vermieden, dass eine Oberfläche zwar ausreichend gehärtet wird, jedoch aufgrund von Spannungen spröde ist und zu Spannungsrissen neigt.

Des Weiteren ist es vorteilhaft, wenn zur Variation in einer Datenbankbibliothek hinterlegte Daten verwendet werden. Insbesondere kann dabei auf Verfahren zur Optimierung und zur Datenanalyse beispielsweise mittels neuronalen Netzen zurückgegriffen werden. Des Weiteren werden in der Datenbank hinterlegte Merkmale beispielsweise zur Optimierung mittels eines genetischen Algorithmus verwendet.

In einer weiteren Ausgestaltung kann zumindest einer der Schritte durch eine Vorgabe ersetzt werden. Vorzugsweise wird eine Walzwerkzeuggeometrie fest vorgegeben. Damit wird beispielsweise der Tatsache Rechnung getragen, dass ein Walzwerkzeug wesentlich aufwendiger zu modifizieren ist, als beispielsweise eine Vorform. Eine andere Ausgestaltung sieht eine umgekehrte Vorgehensweise vor. Vorzugsweise wird ausgehend von einer Endform eine Vorform bzw. das Walzwerkzeug zur Herstellung der Endform wie auch das Pressenwerkzeug zur Herstellung der Vorform berechnet.

Schließlich ist ein Computerprogrammprodukt mit Programmcodemitteln offenbart, die auf einem computerlesbaren Medium gespeichert sind, um zumindest eines der oben beschriebenen Verfahren durchzuführen, wenn das Programm auf einem Computer ausgeführt wird. Ein computerlesbares Medium ist beispielsweise ein magnetisches, ein magnetooptisches oder ein optisches Speichermedium. Des Weiteren wird beispielsweise ein Speicherchip verwendet. Daneben kann ein computerlesbares Medium auch mittels eines Fernspeichers, beispielsweise mittels eines Computemetzwerkes realisiert sein.

Das Computerprogramm kann beispielsweise in einer Maschine zur Oberflächenverdichtung hinterlegt sein. Auch kann eine Berechnung getrennt von der Maschine zur Oberflächenverdichtung erfolgen. Die Maschine verfügt jedoch über eine Steuerung, insbesondere eine weg- und/oder kraftgeführte Steuerung, in der die Koordinaten und Bewegungsabläufe eingebbar sind, um die Vorform zu verdichten.

Des Weiteren wird eine Presswerkzeugform vorgesehen, mit der eine Vorform aus Sintermaterial gepresst werden kann, die nachfolgend auf eine Endform oberflächenverdichtet wird. Diese Presswerkzeugform ist iterativ berechnet. Vorzugsweise wird dabei ebenfalls von Daten einer Endkontur des Werkstücks mit dessen Verzahnung ausgegangen.

Auch kann ein Walzprüfstand vorgesehen sein, der die Möglichkeit bietet, Testwalzungen für unterschiedlichste Oberflächenverdichtungen vornehmen zu können. Darüber können insbesondere auch Daten ermittelt werden, die ausgewertet in die Berechnungsverfahren eingehen können. Beispielsweise können hierfür geeignete Kennwerte aus einer Vielzahl von Messungen gebildet werden. Darüber können beispielsweise Startwerte für die iterative Berechnung von Vorform, Werkzeug oder Presswerkzeug erfolgen. Auch kann der Walzprüfstand eine automatisierte Vermessung von oberflächenverdichteten Werkstücken, die eine Verzahnung aufweisen, besitzen.

Im folgenden werden weitere Gedanken vorgeschlagen, die mit den bisherigen vorgeschlagenen Aspekten kombiniert ausführbar sind.

Es wird ein Verfahren zur Herstellung einer Verzahnung aus verdichtetem Sintermaterial vorgesehen, wobei eine vorverdichtete Zahnvorform zumindest in einem Bereich mittels iterativ ermittelter Daten zumindest um 0,05 mm an ihrer Oberfläche auf ihre Endform verdichtet wird, und eine Güte der Endform zumindest in einem Bereich von mindestens f_{Hα} = 4, F_{α} = 7 und f_{fα} = 7 erzielt wird. Hierbei bedeuten f_{Hα} die Abweichung bezüglich der Verzahnung, F_{α} die totale Abweichung und f_{fα} die Profilformabweichung der Flanken. Die angegebenen Werte entsprechen den DIN-Klassen bezüglich der Abweichung.

Gemäß einer Weiterbildung ist vorgesehen, dass eine Iteration Parameter berücksichtigt, die ein Werkstoffverhalten bei einem Oberflächenverdichten der Zahnform betreffen. Eine Ausgestaltung sieht vor, dass eine Iteration zur Bestimmung einer Vorform von eingegebenen Daten ausgeht, die aus einer Vorgabe der Endform entnommen werden. Vorzugsweise wird zumindest ein Walzwerkzeug eingesetzt, welches die gleiche Güte aufweist wie die später erstellte Endform. Durch die iterative Bestimmung und dadurch äußerst genaue Bearbeitung bei der Oberflächenverdichtung wird ermöglicht, das die Güte des Werkzeugs auf die Vorform übertragen werden kann. Insbesondere ermöglicht die äußerst genaue Oberflächenverdichtung, dass die Verzahnung nach dem Oberflächenverdichten ohne weiteren materialabtragenden Nachbearbeitungsschritt diese Güte der Endform aufweist. Beispielsweise wird ein Werkstück mit der Verzahnung eine Kerndichte von mindestens 7,4 g/cm³ hergestellt mit einer Oberflächendichte, die zumindest in einem Bereich einer Zahnflanke maximal ist, wobei die maximale Oberflächendichte sich in dem Bereich zumindest 0,02 µm in die Tiefe erstreckt.

Weiterhin wird ein Verfahren zur Herstellung einer Verzahnung aus verdichtetem Sintermaterial offenbart, wobei eine vorverdichtete Zahnvorform zumindest in einem Bereich mittels iterativ ermittelter Daten auf ihre Endform verdichtet wird, und eine Rauhigkeit in dem Bereich gegenüber der Vorform um zumindest 400 % verbessert wird, wobei eine Oberflächenhärte von zumindest 130 HB eingestellt wird. Vorzugsweise wird eine Kerndichte der Endform eingestellt, die zumindest eine Dichte von 7,3 g/cm³ aufweist, und eine Oberflächenhärte aufgeprägt, die einen konvexen Verlauf von der Oberfläche hin zu einer Mitte der Endform aufweist.

Die Verzahnung aus vorverdichtetem Material weist in einem ersten oberflächenverdichteten Bereich eine Rauhigkeit aufweist, die um mindestens 400 % kleiner ist als eine Rauhigkeit In einem zweiten Bereich, der geringer oder gar nicht oberflächenverdichtet ist. Die Rauhigkeit R_{z} beträgt beispielsweise im ersten Bereich weniger als 1 µm. Eine weitere Ausgestaltung sieht vor, dass eine Oberflächenhärte von zumindest 700 HV [0,3] an der Oberfläche der Endform vorliegt, während in einer Tiefe von 0,4 mm von der Oberfläche zumindest eine Härte von 500 HV [0,3] vorhanden ist. Eine andere Ausgestaltung weist eine Oberflächenhärte von zumindest 700 HV [0,3] an der Oberfläche einer Zahnflanke und in einem Zahngrund auf, wobei eine Härte von zumindest 500 HV [0,3] in einer Tiefe von 0,6 mm von der Oberfläche im Zahngrund und eine Härte von zumindest 500 HV [0,3] in einer Tiefe von 0,8 mm von der Oberfläche an der Zahnflanke vorliegt. Durch die Herstellung der Oberflächenverdichtung wird ermöglicht, genaue Verdichtungen wie auch Härtungen entsprechend gewünschter Vorgaben gezielt einstellen zu können.

Es wird ein Berechnungsverfahren zur Auslegung einer Vorform einer Verzahnung aus Sintermaterial vorgeschlagen, wobei Daten in das Berechnungsverfahren eingehen, die aus einer vorgegebenen Endform der Verzahnung ermittelt werden, in Abhängigkeit von zumindest einer Verwendungsbedingung der Endform ein oder mehrere Belastungsparameter der Verzahnung ermittelt werden, ein lokales Aufmaß der Vorform berechnet wird, die mit einer erwarteten Verdichtung der Vorform an der Oberfläche korreliert wobei eine Belastung des Sintermaterials unterhalb der Oberfläche in die Berechnung mit eingeht.

Vorzugsweise wird der Berechnung zusätzlich ein Eindringen des Werkzeugs in das herzustellende Werkstück bei der Berechnung zugrundegelegt wird, wobei insbesondere das Verhalten des Sintermaterials beim Eindringen und nach dem Eindringen Berücksichtigung finden kann. Beispielsweise sieht das Berechnungsverfahren vor, dass ein elastisches Verformen des zu verdichtenden Sintermaterials berücksichtigt wird. Auch kann das Berechnungsverfahren vorsehen, dass ein elastisch-plastisches Verformen des an der Oberfläche zu verdichtenden Sintermaterials berücksichtigt wird. Vorzugsweise geht eine Tiefe einer maximalen Belastung unterhalb der Oberfläche beispielsweise bei einer Verwendung des Werkstücks als kraftübertragendes Zahnrad in das Berechnungsverfahren ein. Das Berechnungsverfahren kann weiterhin ein Schrumpfen des Sintermaterials beim Sintern in die Berechnung eingehen lassen. Auch können empirisch ermittelte Daten ebenfalls in die Berechnung eingehen.

Es wird ein Berechnungsverfahren zur Auslegung eines Werkzeugs zur Oberflächenverdichtung einer Vorform einer Verzahnung aus insbesondere verdichtetem Sintermaterial zur Erstellung einer vorgegebenen Zahngeometrie vorgeschlagen, wobei ermittelte Daten aus der vorgegebenen, herzustellenden Zahngeometrie zur Berechnung von Werkzeugmaschinenkinematiken unter Berücksichtigung von miteinander assoziierten Maschinenachen eines Werkstückes, aus dem das herzustellende Werkzeug geformt wird, und zumindest eines Werkzeugformgebers, deren gekoppelter Systemkoordinaten und deren Bewegung zueinander, iterativ miteingehen. Damit besteht nun die Möglichkeit, anstatt über wiederholte Versuche, Messergebnisse und Anpassungen des Werkstückformgebers schließlich eine endgültige Form zu finden, dieses mittels einer iterativen Berechnung durchzuführen. Dieses ist wesentlich zeitersparender und ermöglicht die Berücksichtigung unterschiedlichster Einflussparameter. Insbesondere ist auch eine Simulation der Auslegung ermöglicht, so dass beispielsweise eine Wirkweise des herzustellenden Werkzeugs auf eine ausgelegte Vorform in der Simulation überprüfbar wird.

Gemäß einer Ausgestaltung gehen in das Berechnungsverfahren Kontaktbedingungen zwischen dem herzustellenden Werkstück und dem Werkzeugformgeber zwischen einer Spitze und einem Fuß der Verzahnung ein. Vorzugsweise geht hierbei auch im Bereich eines Fußes der Verzahnung eine maximale Spannung an der Oberfläche in die Berechnung mit eingeht. Des weiteren besteht die Möglichkeit, dass im Bereich einer Flanke der Verzahnung eine maximale Spannung unterhalb der Oberfläche in die Berechnung mit eingeht. Dieses Verfahren ist insbesondere für Sintermaterialien geeignet, aber auch bei Stahlwerkstücken oder Werkstücken aus anderen Werkstoffen.

Weiterhin wird ein Pressformwerkzeug mit einer Pressengeometrie zur Herstellung einer Vorform einer Verzahnung aus Sintermaterial vorgeschlagen, wobei die Pressengeometrie eine an ein Oberflächenverdichten der Verzahnung angepassten Verlauf mit zumindest einer Erhebung aufweist, die zumindest im Bereich der Verzahnung der Vorform eine Vertiefung erzeugt, die mit Sintermaterial beim Oberflächenverdichten auffüllbar ist.

Vorzugsweise bewirkt die Erhebung auf einer Stirnseite der Vorform eine Vertiefung im Bereich eines Kopfes eines Zahnes der Verzahnung. Beispielsweise durch iterative Berechnung lässt sich die Höhe der Erhebung bzw. Tiefe der Vertiefung wie auch weitere Abmessungen hiervon bestimmen. Eine weitere Ausgestaltung sieht anstatt einer einseitigen Erhebung vor, dass eine beidseitige Erhebung vorgesehen ist, um an beiden Stirnseiten des Zahnes jeweils eine Vertiefung zu bewirken. Die Erhebung ist gemäß einer Weiterbildung in einem Bereich der Geometrie angeordnet, der auf einem Zahnkopf der Vorform eine Vertiefung bewirkt, wobei die Erhebung eine Abmessung, dass die geformte Vertiefung zumindest teilweise ein Wachsen des Zahnkopfes aufgrund der Bearbeitung der Vorform in die Endform durch das Oberflächenverdichten zumindest vermindert. Auf diese Weise lässt sich beispielsweise eine Vorform mit zumindest einer Vertiefung an einer Stirnseite einer Verzahnung zum Ausgleich eines Materialaufwurfes bei einem Oberflächenverdichten einer Lauffläche der Verzahnung berechnen und insbesondere fertigen. Auch lässt sich auf diese Weise eine Vorform mit zumindest einer Vertiefung auf einem Zahnkopf einer Verzahnung zum zumindest Vermindern eines Wachsens des Zahnkopfes in die Höhe bei einem Oberflächenverdichten zumindest der Flanken der Verzahnung berechnen und insbesondere fertigen. Das Berechnungsverfahren zur Ermittlung einer Geometrie einer Vorform oder eines Pressformwerkzeugs sieht vorzugsweise vor, dass die Geometrie ausgehend von Daten einer Endform der Vorform bestimmt und zumindest eine Vertiefung oder Erhebung berechnet wird, die zumindest teilweise einen Ausgleich einer Materialverschiebung beim Oberflächenverdichten bewirkt.

Weiters wird ein Verfahren zur Oberflächenverdichtung einer Verzahnung vorgeschlagen, wobei eine Anzahl einer zu wiederholenden Verdichtungsbewegung eines Formwerkzeuges zum Oberflächenverdichten einer Fläche an der Vorform iterativ berechnet wird. Vorzugsweise wird ein Überrollen bis zum Erreichen einer vorbestimmtem Oberflächendichte iterativ berechnet. Eine Weiterbildung sieht vor, dass ein Vorschub des Formwerkzeuges iterativ berechnet wird. Gemäß einer Ausgestaltung erfolgt weniger als 20 mal ein Überrollen der Vorform zur Erzielung der vorgegebenen Geometrie einer Endform des Oberflächenverdichtens. Vorzugsweise erfolgt weniger als 10 mal das Überrollen. Insbesondere wird weniger als 6 mal ein Überrollen der Vorform durchgeführt, bis eine vorgegebene Geometrie einer Endform des Oberflächenverdichtens erreicht wird. Hierbei ist zu berücksichtigen, dass mit dem Erreichen noch keine Beendigung der Oberflächenverdichtung stattfindet. Vielmehr wird anschließend noch mehrmals, insbesondere weniger als 25 mal, vorzugsweise weniger als 15 mal, weiter das Werkzeug auf der Oberfläche abgefahren. Dadurch wird eine Genauigkeit der Oberflächengestalt sichergestellt.

Weiterhin wird ein Verfahren vorgeschlagen, bei dem ein reversierendes Rollen an einer Verzahnung aus Sintermaterial ausgeführt wird, um die Vorform zur Endform eines Oberflächenverdichtens zu verdichten. Vorzugsweise wird vor einer Richtungsumkehr ein kurzes Entlasten der Vorform durch das Formwerkzeug erfolgt. Es hat sich herausgestellt, dass durch das Reversieren, das bedeutet, durch die Umkehr der Bewegung eine vergleichmäßigte Verdichtung sich schaffen lässt. Darüber hinaus gelang es, Probleme bei der Fertigung noch weiter zu minimieren, indem der Druck des Werkzeuges auf das Werkstück verringert wurde, bevor die Bewegungsumkehr einsetzt. Dabei kann das Werkzeug mit dem Werkstück in Kontakt bleiben. Es kann aber auch sich kurz von der Oberfläche lösen.

Auch wird eine Oberflächenverdichtung eines Werkstücks mit zumindest einer Verzahnung aus Sintermaterial vorgeschlagen, wobei eine erste Oberfläche des Werkstücks mit einem anderen Verfahren verdichtet ist als eine zweite Oberfläche des Werkstücks. Vorzugsweise weist eine erste Verzahnung des Werkstücks eine andere Verdichtung aufweist als eine zweite Verzahnung des Werkstücks. Eine Weiterbildung sieht vor, dass eine Innenverzahnung des Werkstücks eine andere Oberflächenverdichtung erfährt als eine Außenverzahnung des Werkstücks. Auch besteht die Möglichkeit, dass eine Außenverzahnung mittels eines Wälzverfahrens oberflächenverdichtet ist, während eine zweite Fläche eine Bohrung ist, die mit einem anderen Verfahren oberflächenverdichtet ist. Vorzugsweise erhält eine Bohrung im Werkstück nach einem Oberflächenverdichten eine gehärtete Oberfläche und wird anschließend auf eine Endform gebracht. Dieses erlaubt die Nutzung der Bohrung für eine Welle oder eine Achse. Eine Verbesserung der Genauigkeit ist dadurch erzielbar dass nach einer Härtung der Verzahnung eine Oberflächenverdichtung erfolgt.

Es wird eine Welle mit zumindest einer ersten und mit einer zweiten Verzahnung, wobei die erste Verzahnung aus Sintermaterial gewälzt und oberflächenverdichtet ist. Im folgenden werden Merkmale bezüglich der Welle beziehungsweise der Verzahnungen angegeben. Hierbei kann für weitere Ausgestaltungen insbesondere auch die weitere Offenbarung bezüglich der Verzahnung, der Materialien, der Herstellungsschritte usw. genutzt werden.

Gemäß einer Ausgestaltung weist die Welle eine zweite Verzahnung auf, die nach einem anderen Verfahren hergestellt ist als die erste Verzahnung. Dieses ermöglicht eine Vielzahl an Kombinationen, die für jeden Beanspruchungsfall verschiedene Materiallösungen vorsieht. Die zweite Verzahnung bildet gemäß einer weiteren Ausgestaltung mit der ersten Verzahnung ein Werkstück. Beispielsweise können beide Verzahnungen zusammen in einer Pressmaschine hergestellt worden sein. Vorzugsweise sind die erste und die zweite Verzahnung iterativ berechnet und entsprechend hergestellt worden. Gemäß einer Ausgestaltung kann die Herstellung nacheinander, gemäß einer anderen Ausgestaltung aber auch gleichzeitig erfolgen. Insbesondere gilt dieses auch für weitere Bearbeitungsschritte wie zum Beispiel eine Oberftächenverdichtung.

Eine Weiterbildung sieht vor, dass die zweite Verzahnung eine gehärtete Oberfläche ohne Oberflächenverdichtung aufweist. Für einige Belastungsfälle ist die durch das Sintern erzielte Dichte oder dem verwendeten Material innewohnende Festigkeit ausreichend. Dieses gilt belspielsweise für Pumpenanwendungen.

Weiterhin hat es sich als vorteilhaft erwiesen, wenn zumindest die erste Verzahnung zumindest an einem Zahn jeweils verschiedene Flankensteigungen auf gleicher Höhe des Zahns aufweist. Dieses ist bei Anwendungen vorteilhaft, bei denen eine Hauptdrehrichtung und insbesondere nur eine Drehrichtung der Welle vorgegeben ist. Die unterschiedlichen Flankensteigungen können dadurch verschleiß- und geräuschmindemd ausgelegt werden.

Eine andere Ausgestaltung sieht vor, dass die zweite Verzahnung geschmiedet ist. Sie kann zusätzlich oberflächenverdichtet sein. Diese Verzahnung kann beispielsweise eine größere Kraftübertragung aufnehmen als die erste Verzahnung.

Vorzugsweise ist die zweite Verzahnung aus einem anderen Material als die erste Verzahnung ist. Beispielsweise ist die zweite Verzahnung aus Stahl. Die zweite Verzahnung kann jedoch auch aus einem anderen Sintermaterial bestehen als die erste Verzahnung. Zusätzlich kann die Welle ebenfalls aus Sintermaterial sein. Sie kann beispielsweise das gleiche Material wie die erste Verzahnung aufweisen. Auch kann die Welle zumindest zusammen mit der ersten Verzahnung gebildet werden, d.h. aus Pulvermaterial verpresst werden, vorzugsweise in einer gemeinsamen Pressform.

Ein beispielhaftes Verfahren zur Herstellung der oben beschriebenen Welle kann auch vorsehen, dass zumindest die erste Verzahnung eine Oberflächenverdichtung erhält und eine Bohrung zur Aufnahme der Welle oberflächenverdichtet, gehärtet und anschließend gehont wird, bevor die Welle und die erste Verzahnung miteinander verbunden werden. Hiefür erfolgt vorzugsweise ausgehend von einer Endform der Welle mit der ersten Verzahnung eine iterative Berechnung einer Vorform der ersten Verzahnung.

Bevorzugte Anwendungen für eine derartige Welle ergeben sich in der Kraftfahrzeugtechnik wie auch im Getriebebau sowie bei Haushaltsgeräten.

Weiterhin wird eine Vorform zur Herstellung einer Verzahnung aus Sintermaterial genutzt, wobei die Vorform ein negatives Aufmaß aufweist. Vorzugsweise ist das negative Aufmaß zumindest auf einer Flanke eines Zahnes der Verzahnung angeordnet ist. Insbesondere kann das negative Aufmaß asymmetrisch entlang der Flanke verlaufen.

Eine Weiterbildung sieht vor, dass auf jeder Flanke eines Zahns ein negatives Aufmass vorgehen ist. Beispielsweise weist ein Zahn auf gleicher Höhe ein erstes negatives Aufmaß auf einer ersten Flanke und ein zweites negatives Aufmass auf einer zweiten Flanke aufweist, wobei die erste und die zweite Flanke zueinander asymmetrisch verlaufen.

Vorzugsweise ist das negative Aufmaß zwischen einem Kopfbereich des Zahns und einem Aufmass auf einer Flanke des Zahns angeordnet. Zusätzlich oder alternativ kann das negative Aufmass in einem Eckbereich des Zahnfußes angeordnet sein. Weiterhin besteht die Möglichkeit, dass eine Flankensteigung der Flanken eines Zahnes verschieden sind.

Neben einer Außenverzahnung oder sonstigen Verzahnungsart wird eine Oberflächenverdichtung auch bei einer Verzahnung ausgeführt, die eine Innenverzahnung ist. Aus der Vorform wird schließlich ein oberflächenverdichteters Zahnrad.

Eine Weiterbildung sieht ein Verfahren zur Herstellung einer Verzahnung aus einem Sintermaterial vor, wobei einer Vorform zumindest ein mittels iterativer Berechnung ermitteltes negatives Aufmaß zugeordnet wird, das bei einer Oberflächenverdichtung der Verzahnung zumindest teilweise durch Verdrängung des Sintermaterials gefüllt wird. Vorzugsweise wird ein zum negativen Aufmaß benachbartes Aufmassmaterial in das negative Aufmaß verdrängt. Die Vorform kann in die angestrebte Endform oberflächenverdichtet werden, wobei optional eine Härtung und/oder eine Oberflächenfeinbearbeitung erfolgt. Dieses kann vorher oder nach dem Oberflächenverdichten erfolgen. Als Feinbearbeitung kommt ein Honen wie auch ein Schleifen in Betracht.

Vorzugsweise erfolgt die Gestaltung des negativen Aufmasses über eine iterative Berechnung, bei der eine Simulation der Oberflächenverdichtung an der Vorform ermittelt, ob das benachbarte Aufmass von seiner Gestalt so ausgelegt ist, dass d das negative Aufmass zur angestrebten Endkontur hin geglättet werden kann. Dazu wird Maschine zur Berechnung und/oder zur Ausführung einer Oberflächenverdichtung einer Verzahnung zur Verfügung gestellt, wobei eine berechnete Kinematik eingebar ist, mittels der über die Oberflächenverdichtung ein negatives Aufmaß auf einer Flanke der Verzahnung auf eine angestrebte Endkontur glättbar ist.

Weiterhin wird ein Verfahren zur Herstellung einer Oberflächenverdichtung an einer Verzahnung vorgeschlagen, wobei zumindest zwei Vorformen gleichzeitig eine Oberflächenverdichtung in einer Vorrichtung erhalten.

Gemäß einer Ausgestaltung werden die Vorformen auf parallel angeordneten Wellen angeordnet und gelangen gleichzeitig in Eingriff mit zumindest einem Werkzeug zur Oberflächenverdichtung.

Gemäß einer zweiten Ausgestaltung werden zumindest zwei Vorformen auf einer gemeinsamen Welle angeordnet und gemeinsam in Eingriff mit zumindest einem Werkzeug zur Obertlächenverdichtung gebracht.

Des Weiteren wird eine Vorrichtung zur Herstellung einer Oberflächenverdichtung an einer Verzahnung vorgeschlagen, wobei zumindest zwei Vorformen zur Oberflächenverdichtung in der Vorrichtung haltbar und gleichzeitig bearbeitbar sind.

Beispielsweise ist vorgesehen, dass eine Bewegung zumindest einer Welle vorgesehen ist, bei der beide Vorformen in Eingriff mit einem Werkzeug zur Oberflächenverdichtung gelangen. Eine Weiterbildung sieht vor, dass zumindest drei Wellen für zumindest zwei Vorformen und zumindest ein Werkzeug parallel zueinander angeordnet sind und ein Dreieck bilden, wobei zumindest eine der Wellen auf die beiden anderen Wellen zubewegbar ist. Eine weiter Ausgestaltung sieht vor, dass zumindest zwei Vorformen auf einer gemeinsamen Welle anbringbar sind, wobei das Werkzeug eine größere Länge aufweist als eine addierte Länge zumindest beider Vorformen. Vorzugsweise können die Vorformen mit ihren Stirnflächen aneinander liegen. Eine andere Ausgestaltung sieht vor, dass zwischen den Vorformen ein Abstand angeordnet ist, wobei das Werkzeug längs der Welle über beide äußeren Stirnflächen der Vorformen hinausragt.

Weiterhin wird ein Bauteil mit einer oberflächenverdichteten Verzahnung aus Sintermaterial vorgeschlagen, wobei das Bauteil über einen Querschnitt betrachtet, einen Gradienten bezüglich verwendeter Sintermaterialien aufweist.

Vorzugsweise weist das Bauteil einen Gradient auf, der eine Sprungfunktion aufweist. Die Sintermaterialien sind zumindest in diesem Bereich mit einer Übergangsgrenze versehen. Gemäß einer Ausgestaltung ist diese Übergangsgrenze entlang der gesamten Fläche zwischen ersten und zweiten Sintermaterial vorhanden. Eine andere Ausgestaltung sieht vor, dass in einem Bereich keine feste Grenze sondern ein gradueller übergang vorliegt. Insbesondere kann vorgesehen sein, dass das Bauteil verschiedene Sintermaterialen aufweist, die sich ineinander erstrecken, ohne eine ausgeprägte Durchmischungszone mit steigendem oder abnehmendem Gradienten aufzuweisen.

Eine erste Weiterbildung des Bauteils beinhaltet, dass das Sintermaterial der Verzahnung eine geringere Kerndichte aufweist als das Sintermaterial eines sich an die Verzahnung anschließenden Bereich des Bauteils. Eine zweite Weiterbildung des Bauteil sieht vor, dass das Sintermaterial der Verzahnung eine höhere Kerndichte aufweist als das Sintermaterial eines sich an die Verzahnung anschließenden Bereichs des Bauteils.

Eine weitere Ausgestaltung weist ein Bauteil auf, das eine erste Verzahnung mit einem ersten Sintermaterial hat und eine zweite Verzahnung mit einem zweiten Sintermaterial hat.

Vorzugsweise weist eine Verzahnung unterschiedliche Flankenwinkel an einem ein Zahn auf gleicher Höhe auf.

Beispielsweise kann ein erstes Sintermaterial in einem äußeren Bereich des Bauteils angeordnet sein und die Verzahnung bilden, und ein zweites Sintermaterial ist in einem inneren Bereich des Bauteils angeordnet und bildet eine Bohrung.

Des weiteren wird Verfahren zur Herstellung einer oberflächenverdichteten Verzahnung an einem Bauteil vorgeschlagen, wobei ein erstes Sintermaterial in eine Form eingelassen wird, bevor ein zweites Sintermaterial hinzugeführt wird, anschließend ein Verpressen und Sintern erfolgt und mittels einer Oberflächenverdichtung der Verzahnung nur eines der beiden Sintermaterialen verdichtet, während das andere Sintermaterial keinerlei Veränderung erfährt.

Eine Weiterbildung sieht vor, dass eine zweiter Oberflächenverdichtung ausgeführt wird, die nur das noch nicht oberflächenverdichtete Sintermaterial betrifft. Vorzugsweise ist vorgesehen, dass das erste Sintermaterial zumindest eine Oberfläche der Verzahnungsflanken bildet und das zweite Material eine Unterfütterung der Verzahnung bildet.

Ein weiteres vorgeschlagenes Verfahren zur Herstellung einer oberflächenverdichteten Verzahnung an einem Bauteil sieht vor, ein erstes Sintermaterial in eine Form einzulassen, bevor ein zweites Sintermaterial hinzugeführt wird, anschließend ein Verpressen und Sintern auszuführen und mittels einer Oberflächenverdichtung der Verzahnung das erste und das zweite Sintermaterial zu verdichten.

Für die Durchführung der Verfahren hat es sich als vorteilhaft erwiesen, dass ein Bewegungsablauf zur Oberflächenverdichtung unter Berücksichtung eines Materialverhaltens von zumindest einem der beiden Sintermaterialien iterativ bestimmt wird.

Eine Weiterbildung für beide Verfahren sieht vor, dass zwischen der Form, insbesondere einer Pressform, und einem einzufüllenden Sintermaterial eine Relativdrehung wirkt, so dass das Sintermaterial in Abhängigkeit von einer Geschwindigkeit der Relativdrehung sich in einem äußeren Bereich der Form ansammelt.

Im übrigen kann auch vorgesehen sein, dass das erste und zumindest das zweite Sintermaterial zumindest über einen Zeitraum überlappend der Form zugegeben werden.

Des weiteren wird auf die US 5,903,815 verwiesen. Aus dieser gehen verschiedene Sintermaterialien, Bedingungen für Sintermaterialien, Formen, Grundsätze bezüglich der Verarbeitung von zwei oder mehr Sintermaterialien, Anwendungen und Verfahrensschritte hervor.

Des Weiteren wird vorgeschlagen, dass insbesondere bei einem geschmiedetem Zahnrad, Kettenrad oder Zahnkranz das Herstellungsverfahren neben dem Oberflächenverdichtungsschritt der Verzahnung auch ein Schleifen oder Honen der verdichteten Zahnflanken und oder Zahnfüße vorgesehen wird. Vorzugsweise ist durch das Schmieden eine Dichte von zumindest 7,6 g/cm³ als Kerndichte erzielt. Das Oberflächenverdichten kann daher eine Vollverdichtung und/oder auch eine Präzision der Gestalt der Verzahnung bewirken. Eine Weiterbildung sieht vor, dass für einen materialabtragenden Bearbeitungsschritt nach dem Oberflächenverdichten ein Aufmaß für diesen Schritt in einem Bereich 4 µm bis 8 µm Material über dem Endmaß steht. Wird anstatt eines Schmiedens ein Verpressen, Sintern und Härten, insbesondere Einsatzhärten ausgeführt, so wird für ein Honen vorzugsweise 30 µm bis 50µm und für en Schleifen 50µm bis 0,3 mm, vorzugsweise 0,1 mm bis 0,2 mm an Aufmaß nach dem Oberflächenverdichten zur Verfügung gestellt. Durch die iterative Berechnung wird ermöglicht, die Bereiche und Aufmasse vorab ermitteln und später im Verfahren auch so umsetzen zu können. Für eine Bohrung im Zahnrad, Kettenrad oder Zahnkranz wird vorzugsweise ebenfalls eine Oberflächenverdichtung vorgesehen, gefolgt von einem Härten und anschließendem vorzugsweise Honem. Die Bohrung kann dafür ebenfalls nach dem Oberflächenverdichten noch über ein Aufmass zwischen 30 µm und 50 µm verfügen.

Ein weiterer Vorteil hat sich ergeben, wenn eine Schmierung beim Oberflächenverdichten erfolgt. Neben der Nutzung von Emulsionen kann insbesondere auch mit Ölen geschmiert werden. Dieses ist bevorzugt bei einem Warmwalzen, zum Beispiel bei Temperaturen von über 220°C. Darüber hinaus wird vorgeschlagen, das Warmwalzen bei einer Temperatur zwischen 500°C und 600°C durchzuführen, wobei vorzugsweise eine Ölkühlung genutzt wird, um einerseits zu schmieren, andererseits auch das Werkzeug zu kühlen.

Im Folgenden wird die Erfindung beispielhaft im Einzelnen anhand der Zeichnung erläutert. Diese dargestellten Ausgestaltungen sind jedoch nicht beschränkend für den Umfang und bezüglich Einzelheiten der Erfindung auszulegen. Vielmehr sind die aus den Figuren hervorgehenden Merkmale nicht auf die jeweils einzelnen Ausgestaltungen beschränkt. Vielmehr sind diese Merkmale mit jeweils anderen, in der Zeichnung oder/und in der Beschreibung einschließlich der Figurenbeschreibung angegebenen Merkmale jeweils zu nicht näher dargestellten Weiterbildungen kombinierbar.

Es zeigen:
- Fig. 1: eine Wälzanordnung,
- Fig. 2: einen ersten Zahn,
- Fig. 3: einen zweiten Zahn,
- Fig. 4: einen dritten Zahn,
- Fig. 5 bis 7: verschiedene Aufmaßverläufe verschiedener Verzahnungselemente,
- Fig. 8: ein erstes Verfahrensschema,
- Fig. 9: ein zweites Verfahrensschema,
- Fig. 10: einen Aufmaßverlauf eines Verzahnungselementes eines Wälzwerkzeuges,
- Fig. 11: eine schematische Ansicht einer berechneten Vertiefung an einer Stirnseite,
- Fig. 12: eine schematische Ansicht berechneter Extremfälle von Werkzeugen,
- Fig. 13: eine schematische Ansicht eines Vorgehens bei der iterativen Berechnung und Verknüpfungen bei einer Simulation,
- Fig. 14,: eine Ansicht von Dichteverläufen in Abhängigkeit von verschiedenen Ausgangsdichten der verwendeten Vorformen,
- Fig. 15: einen Überblick über die ermittelten Fehler, die bei unterschiedlichen Oberflächenverdichtungsschritten auftreten und das Materialverhalten mitcharakterisieren,
- Fig. 16: einen Härteverlauf in HV auf einer Flanke einer Verzahnung bei verschiedenen Oberflächenverdichtungsschritten,
- Fig. 17: einen Härteverlauf in HV in einem Fußbereich einer Verzahnung bei verschiednen Oberflächenverdichtungsschritten,
- Fig. 18: eine schematische Ansicht von verschiedenen berechneten Aufmassverläufen für verschiedene Dichten,
- Fig. 19: eine schematische Darstellung von Parametern, die in die iterative Berechnung eingehen können.

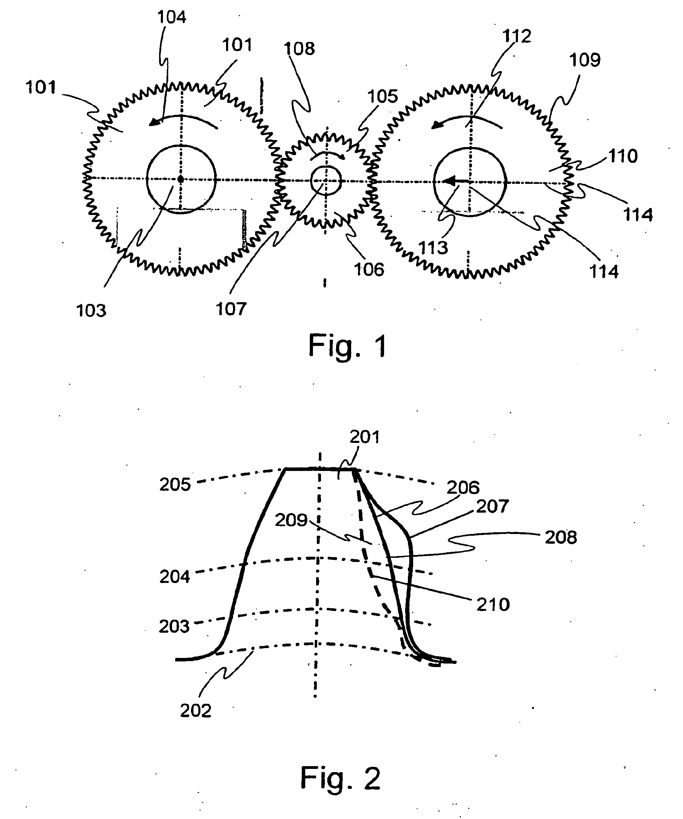

Fig. 1 zeigt eine beispielhafte Wälzanordnung in schematischer Ansicht. Ein erstes Walzwerkzeug 101 mit einer ersten Verzahnung 102 ist um eine erste Achse 103 in einer Rotationsrichtung 104 drehbar gelagert. Die erste Verzahnung 102 befindet sich mit einer zweiten Verzahnung 105 einer Vorform 106 in Eingriff. Die Vorform 106 ist um eine zweite Achse 107 drehbar gelagert. Entsprechend resultiert eine zweite Rotationsrichtung 108. Des Weiteren befindet sich die zweite Verzahnung 105 mit einer dritten Verzahnung 109 eines zweiten Walzwerkzeuges 110 im Eingriff. Dieses zweite Walzwerkzeug 110 ist um eine dritte Achse 111 in einer dritten Rotationsrichtung 112 drehbar gelagert. Beispielsweise können die erste Achse 103 oder die zweite Achse 107 Festachsen sein, während die beiden andern Achsen eine Zustellbewegung ausführen können. Beispielsweise ist die dritte Achse 111 In einer Verschiebungsrichtung 113 längs einer Verbindungslinie 114 der ersten 103, der zweiten 107 und der dritten Achse 111 verschiebbar. Beispielsweise kann ein Maßwalzvorgang vorgenommen werden. Hierbei werden insbesondere Zahnflanken lediglich geringfügig verdichtet und insbesondere nicht die Zahngründe verdichtet. Hierbei kommt es zu einer Oberflächenverdichtung in einem gewünschten Bereich. Bei einer Oberflächenverdichtung kann andererseits auch nur oder auch zusätzlich der Zahngrund oberflächenverdichtet werden. Beispielsweise findet dafür während eines Walzvorganges eine fortschreitende Verschiebung in Richtung der Verschiebungsrichtung 113 statt. Insbesondere wird mittels des ersten und des zweiten Walzwerkzeuges 101, 110 auch ein Bereich der Zahnfüße der Vorform 106 verdichtet Zur Verstellung des ersten und/oder des zweiten Walzwerkzeuges 110 sowie zur Aufprägung eines für einen Walzvorgang notwendigen Druckes ist eine nicht dargestellte Verstellvorrichtung vorzugsweise mit einem Getriebe vorgesehen. Darüber können insbesondere auch sehr hohe Drücke aufgebracht werden.

Fig. 2 zeigt einen ersten Zahn 201 eines nicht dargestellten zugehörigen Verzahnungselementes. Bei diesem Verzahnungselement handelt es sich um ein Zahnrad. Eine Geometrie des Verzahnungselementes bzw. des ersten Zahnes 201 ist dabei durch einen ersten Fußkreis 202, einen ersten Fußnutzkreis 203, einen ersten Wälrkreis 204 und einen ersten Kopfkreis 205 charakterisiert. An einer ersten Flanke 206 weist der erste Zahn 201 vor einem Walzvorgang einen ersten Aufmassverlauf 207 auf. Nach einem beendeten Walzvorgang resultiert ein erster Endmaßverlauf 208, wobei entsprechend eine erste verdichtete Randschicht 209 resultiert. Schematisch dargestellt ist diese durch eine erste Verdichtungsgrenzlinie 210 begrenzt. Diese Linie begrenzt den Bereich des ersten Zahns 201, innerhalb dessen die volle Dichte erreicht wird. Die volle Dichte ist dabei vorzugsweise bezogen auf eine Dichte eines vergleichbaren pulvergeschmiedeten Zahns.

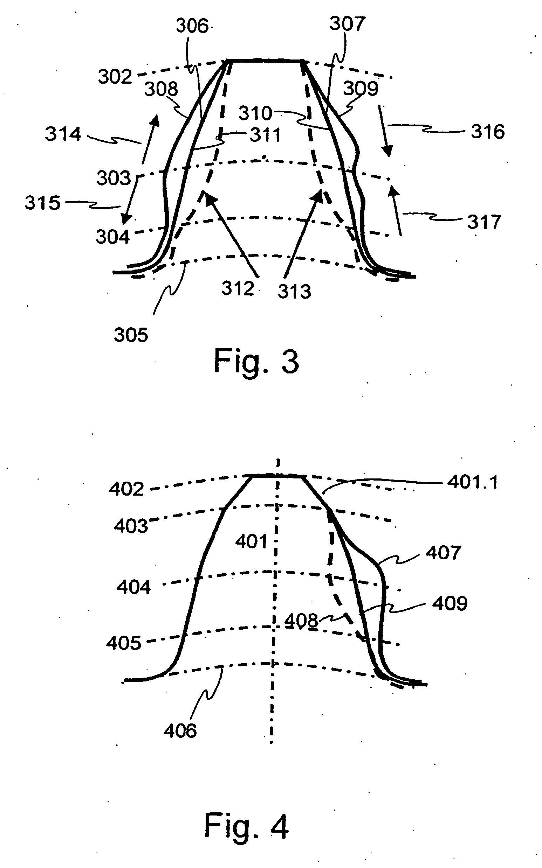

Fig. 3 zeigt einen zweiten Zahn 301 eines nicht dargestellten Verzahnungselementes. Bei diesem Verzahnungselement handelt es sich ebenfalls um ein Zahnrad. Zweiter Zahn 301 und Zahnrad sind durch einen zweiten Kopfkreis 302, einen zweiten Wälzkreis 303, einen zweiten Fußnutzkreis 304 und einen zweiten Fußkreis 305 charakterisiert. Zur Erzielung eines an einer zweiten Flanke 306 und einer dritten Flanke 307 identischen Verdichtungsverlaufes ist ein zweiter Aufmaßverlauf 308 und ein dritter Aufmaßverlauf 309 vorgesehen. Nach einem Walzvorgang resultiert auf der zweiten Flanke 306 ein zweiter Endmaßverlauf 310 und auf der dritten Flanke 307 ein dritter Endmaßverlauf 311. Des Weiteren resultiert eine zweite Verdichtungsgrenzlinie 312 und eine dritte Verdichtungsgrenzlinie 313. Aufgrund der durch die Wälzbewegung in einer Rotationsrichtung unterschiedlichen Kräfte an der zweiten Flanke 306 und der dritten Flanke 307 sind der zweite Aufmaßverlauf 308 und der dritte Aufmaßverlauf 309 unterschiedlich ausgestaltet. Verdeutlicht wird die unterschiedliche Einwirkung von Kräften an den Zahnflanken 306, 307 bei einem Wälzvorgang durch die dargestellten Gleitgeschwindigkeitsrichtungen. An der zweiten Flanke 306 resultieren eine erste 314 und eine zweite Gleitgeschwindigkeitsrichtung 315. Diese sind ausgehend vom zweiten Wälzkreis 303 in Richtung des zweiten Kopfkreises 302 bzw. in Richtung des zweiten Fußkreises 305 gerichtet. An der dritten Flanke 307 hingegen resultiert eine dritte Gleitgeschwindigkeitsrichtung 316 und eine vierte Gleitgeschwindigkeitsrichtung 317, die gegeneinander gerichtet sind.

Fig. 4 zeigt einen dritten Zahn 401 eines nicht dargestellten Verzahnungselementes. Bei diesem Verzahnungselement handelt es sich ebenfalls um ein Zahnrad. Zahnrad und dritter Zahn 401 sind wiederum durch einen dritten Kopfkreis 402, einen Kopfnutzkreis 403, einen dritten Wälzkreis 404, einen dritten Fußnutzkreis 405 sowie durch einen dritten - Fußkreis 406 charakterisiert. Bei dem gezeigten dritten Zahn 401 handelt es sich um eine Verzahnung mit einer Kopfrücknahme, vorzugsweise in Form einer Kopfabrundung. Es sind jedoch auch andere Geometrien in diesem Bereich möglich. Dabei ist in einem Zahnkopfbereich 401.1 zwischen dem dritten Kopfkreis 402 und dem Kopfnutzkreis 403 ein Zahnprofil zurückgenommen. Dies führt dazu, dass in diesem Bereich der Zahn nicht mit einer evolventischen Gegenverzahnung in Eingriff tritt. In diesem Fall liegt ein aktiver Zahnbereich lediglich im Bereich zwischen dem Kopfnutzkreis 403 und dem Fußnutzkreis 405 bzw. zwischen dem Kopfnutzkreis 403 und dem dritten Fußkreis 406. Ein vierter Aufmassverlauf 407 resultiert nach einem Walzvorgang in einer vierten Verdichtungsgrenzlinie 408. Des Weiteren wird auf der vierten Flanke 409 ein vierter Endmaßverlauf 410 erzielt.

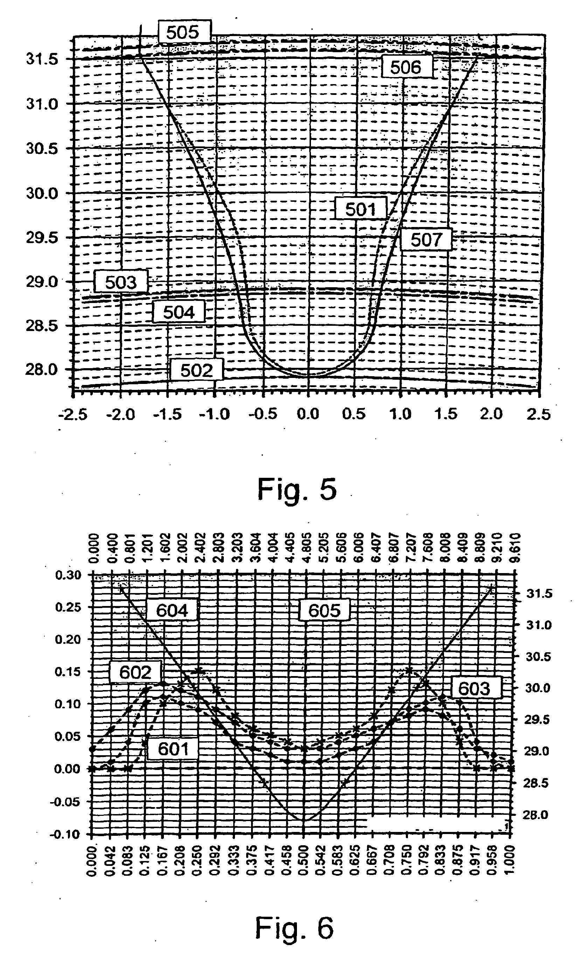

Fig. 5 zeigt einen Aufmaßverlauf zwischen zwei benachbarten Zähnen eines nicht dargestellten Verzahnungselementes. Bei diesem Verzahnungselement handelt es sich wiederum um ein Zahnrad. Zahnrad und Zähne sind durch einen vierten Fußkreis 502, einen vierten Nutzfußkreis 503 der Vorform, einen fünften Nutzfußkreis 504 der Vorform nach einem Schleifvorgang, einen vierten Kopfkreis 505 nach einem Fräsvorgang und einen fünften Kopfkreis 506 nach einem Finishingvorgang charakterisiert. Nach einem Walzvorgang resultiert ein fünfter Endmaßverlauf 507. Auf der Abzissenachse ist eine laterale Abmessung in Millimetern aufgetragen. Auf der Ordinatenachse ist die entsprechend dazu senkrecht ausgerichtete laterale Abmessung ebenfalls in Millimetern aufgetragen. Die Verzahnung verläuft dabei vollständig in der Zeichenebene.

Fig. 6 zeigt eine Zusammenstellung weiterer Aufmaßverläufe. Auf der Abzissenachse ist die nomierte Bodenlänge entlang einer Flankenlinie eines Verzahnungselementes dargestellt. Diese Bogenlinie bezieht sich dabei jeweils auf einen Verlauf von einem Zahnkopf eines ersten Zahns zu einem Zahnkopf eines benachbarten Zahns. Auf der oberen Abzissenachse ist entsprechend die absolute Bogenlänge der entsprechenden Flankenlinie in Millimetern dargestellt. Die linke Ordinatenachse gibt ein Aufmaß in Millimetern an. Die rechte Ordinatenachse beschreibt den entsprechenden Radius der zugehörigen Verzahnung. Dargestellt sind ein sechster Aufmaßverlauf 601, ein siebter Aufmaßverlauf 602 und ein achter Aufmaßverlauf 603. Des Weiteren ist ein zugehöriger Radius 604 der entsprechenden Verzahnung dargestellt Der sechste Aufmaßverlauf 601 und der achte Aufmaßverlauf 603 sind hierbei symmetrisch zu einer Zahngrundsymmetrielinie 605 ausgeführt. Der siebte Aufmaßverlauf 607 ist dagegen unsymmetrisch ausgestaltet. In der Nähe der Zahnsymmetriegrundlinie 605, also im Zahngrundbereich, weisen die Aufmaße jeweils ein lokales Minimum auf. Damit wird eine Verminderung eines Spannungsriss-Risikos begünstigt.

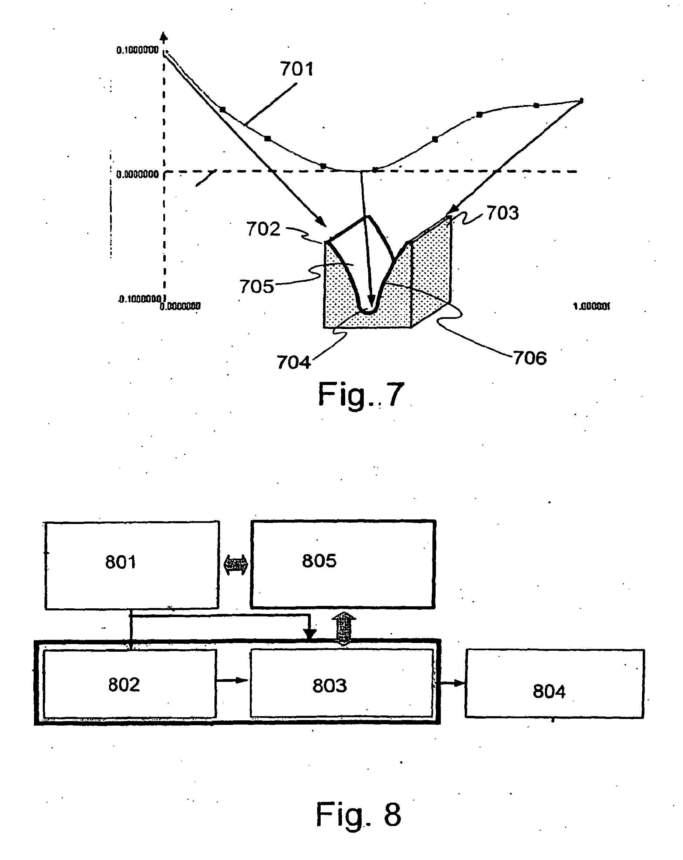

Fig. 7 zeigt einen weiteren Aufmaßverlauf. Gezeigt ist ein neunter Aufmaßverlauf, der von einem linken Zahnkopf 702 zu einem rechten Zahnkopf 703 asymmetrisch verläuft. Wie bereits in Fig. 6 gezeigt ist auch hier ein Aufmaß im Bereich eines Zahngrundes 704 geringer als im Bereich der fünften 705 und der sechsten Flanke 706. Dies dient insbesondere einer Vermeidung von Spannungsanrissen.

Fig. 8 zeigt ein erstes Verfahrensschema. Ausgehend von einer Zielvorgabe 801, welche die Geometrie, ein zu übertragendes Drehmoment eines Zahnrades und eine Druckverteilung umfasst, wird mit einem ersten Geometrieerzeugungsmodul 802 eine Geometrie eines Walzwerkzeuges generiert. Daneben wird sowohl anhand der Zielvorgabe 801 als auch anhand der Geometrie des Walzwerkzeuges eine Geometrie einer Vorform in einem zweiten Geometrieerzeugungsmodul 803 generiert. In einem ersten Simulationsmodul 804 wird ein Wälzvorgang simuliert. Dabei wird sowohl eine Kinematik des Wälzvorganges als auch der Verdichtungsvorgang, der beim Wälzvorgang hervorgerufen wird, simuliert. Dabei wird insbesondere eine Umverteilung von Material, wie sie zum Beispiel in Fig. 3 skizziert ist, berücksichtigt. Die Simulation einer plastischen Verformung erfolgt hierbei beispielsweise mittels einer Finite-Elemente-Methode. Dieses kann mit einem CAD-Programm gekoppelt werden. Optional kann ein zweites Simulationsmodul 805 zur Simulation einer Verspannung berücksichtigt werden. In dieses Modul gehen sowohl einerseits die Zielvorgabe 801 als auch die Geometrie der Vorform ein. Andererseits ermöglicht das zweite Simulationsmodul 805 des Weiteren eine Korrektur der ermittelten Geometrie der Vorform. Insbesondere können das erste Geometrieerzeugungsmodul 802, das zweite Geometrieerzeugungsmodul 803, das erste Simulationsmodul 804 und gegebenenfalls das zweite Simulationsmodul 805 in einer Optimierungsschleife wiederholt ausgeführt werden.

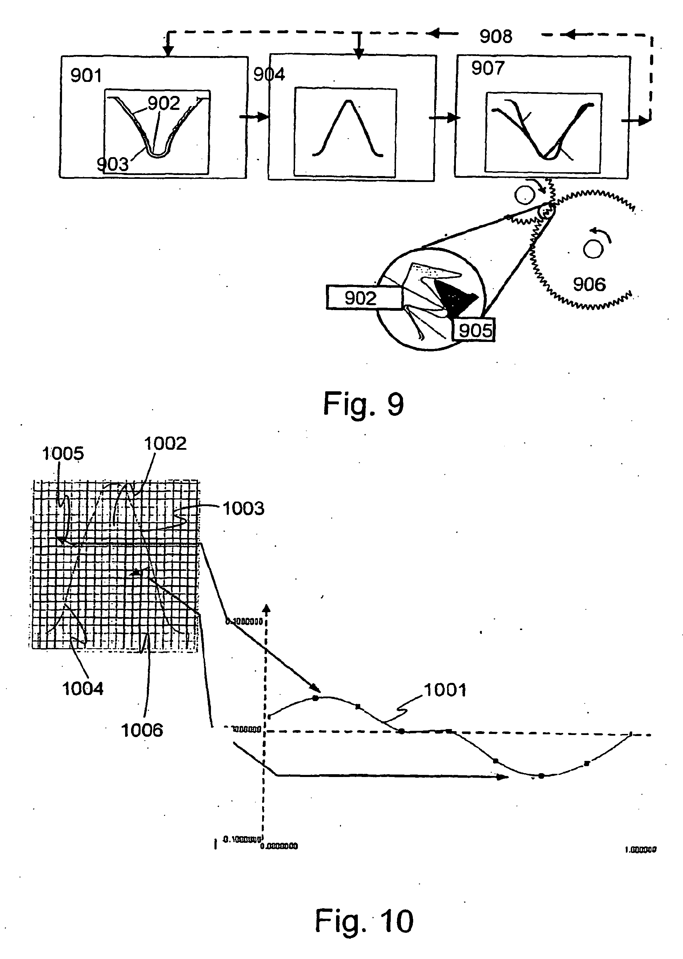

Fig. 9 zeigt ein zweites Verfahrensschema. In einem ersten Schritt 901 wird ein neunter Aufmaßverlauf 902 eines Zahnprofils 903 generiert. Anschließend wird in einem zweiten Schritt 904 ein zweites Zahnprofil 905 eines dritten Walzwerkzeuges 906 generiert. Daran anschließend wird in einem dritten Schritt 907 ein Walzvorgang simuliert. Dabei wird der Abwälzvorgang des ersten Zahnprofils 903 auf dem zweiten Zahnprofil des Walzwerkzeuges 905 und die daraus resultierende Verdichtung simuliert. Anschließend werden der erste, zweite und dritte Schritt 901, 904, 907 in einer Variation 908 gegebenenfalls wiederholt.

Fig. 10 zeigt ein Aufmaßverlauf eines Verzahnungselementes eines Walzwerkzeuges. Dargestellt ist ein zehnter Aufmaßverlauf 1001 eines fünften Zahns 1002 eines nicht dargestellten Walzwerkzeuges. An einer siebten Flanke 1003 und einer achten. Flanke 1004 des fünften Zahns 1002 ist ein unterschiedliches Aufmaß vorgesehen. An der siebten Flanke 1003 ist eine Materialzugabe vorgesehen, die durch einen ersten Pfeil 1005 angedeutet ist. Dagegen ist auf der achten Flanke 1004 eine Zahnrücknahme vorgesehen, die durch den zweiten Pfeil 1006 angedeutet ist. Das Aufmaß ist in diesem Beispiel bezogen auf ein regelmäßiges Profil einer evolventischen Verzahnung. Durch die unsymmetrischen Ausgestaltungen der beiden Zahnflanken 1003, 1004 wird insbesondere einer unsymmetrischen Materialbelastung eines damit zu verdichtenden Verzahnungselementes Rechnung getragen. Auch kann bezüglich der Endform des Werkstücks ein symmetrisches Profil beider Flanken eines Zahnes mittels dieses Walzwerkzeugs erzielt werden, wofür Ausgleiche im Bereich von vorzugsweise kleiner als 0,1 µm vorgenommen werden.

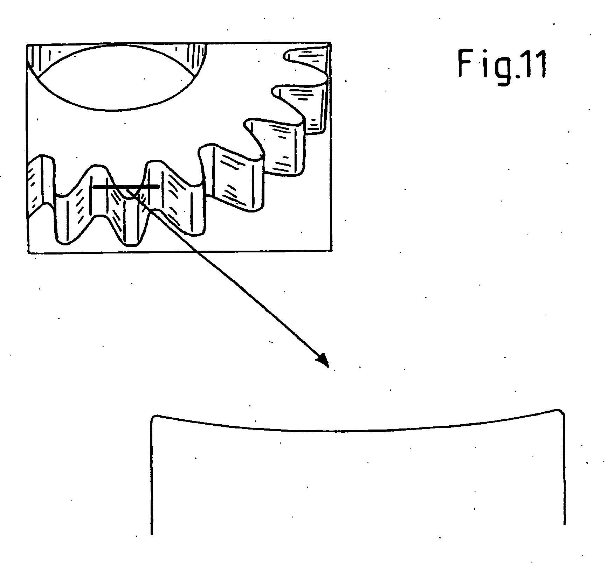

Fig. 11 zeigt eine schematische Ansicht einer berechneten Vertiefung an einer Stirnseite einer Verzahnung. Die Vertiefung dient dazu, eine Wachsen des durch die Oberflächenverdichtung erzielten Verdrängung von Sintermaterial und damit einhergehendem Wachsen des Zahnes in die Höhe und/oder Breite zumindest zu minimieren, wenn nicht sogar auszugleichen. Die Form der Vertiefung ist abhängig vom Aufmaß und von den Abmaßen des Zahnes. Die Form kann iterativ über das Berechnungsverfahren optimiert werden. Eine Simulation ermöglicht eine Abschätzung des späteren tatsächlichen Verhaltens der Vorform.

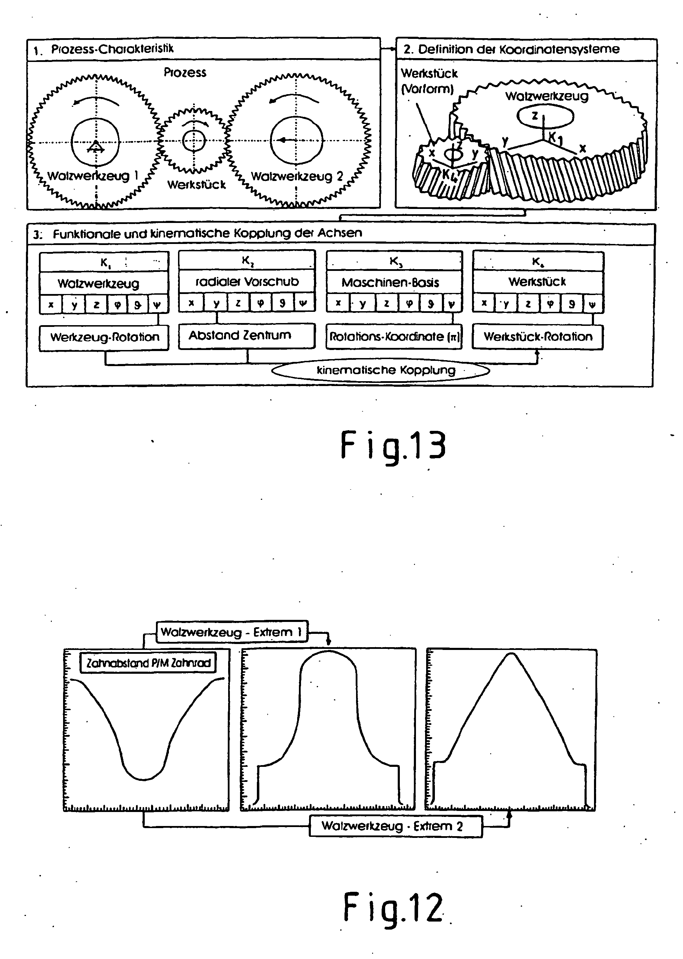

Fig. 12 zeigt eine schematische Ansicht berechneter Extremfälle von Werkzeugen für die Oberflächenverdichtung, die berechenbar sind. Ausgangspunkt der Berechnung ist die linke Endgeometrie der Verzahnung. Über die Berücksichtigung von Abrollbedingungen, von Aufmaßparameter und anderer Einflußfaktoren lassen sich iterativ die jeweils in der Mitte und Rechts davon dargestellten Werkzeugformen ermitteln.

Fig. 13 eine schematische Ansicht eines Vorgehens bei der iterativen Berechnung und Verknüpfungen bei einer Simulation. Ausgehend von den vorgegeben Enddaten des Werkstückes und seiner Verzahnung können die Maschinenkinematiken modelliert werden. Hierbei wird beispielsweise von den einander zugeordneten Maschinenachsen ausgegangen. Über die Kinematiken und funktionalen Verknüpfungen kann sodann mittels der vorhandene Freiheitsgrade eine Optimierung des auszulegenden Werkzeugs vorgenommen werden. Hierbei wird nochmals auf Fig. 12 verwiesen. Die dort dargestellten Beispiele weisen entsprechende Nachteile auf, zum Beispiel zu schwache Fußregion bei der mittleren Darstellung oder zu spitze Kopfgestaltung bei der rechten Darstellung. Über zusätzliche Einflussparameter wie beispielsweise Festigkeitsbetrachtungen und/oder Spannungsverläufe im Material kann sodann eine Iteration hin zu einer für das jeweilige Anforderungsprofil geeigneten Kontur des Werkzeugsausgeführt werden. Für das Werkzeug zur Herstellung der Vorform wird als Ausgangspunkt beispielsweise die ermittelte Endgeometrie mit den berechneten Aufmaßen genommen.

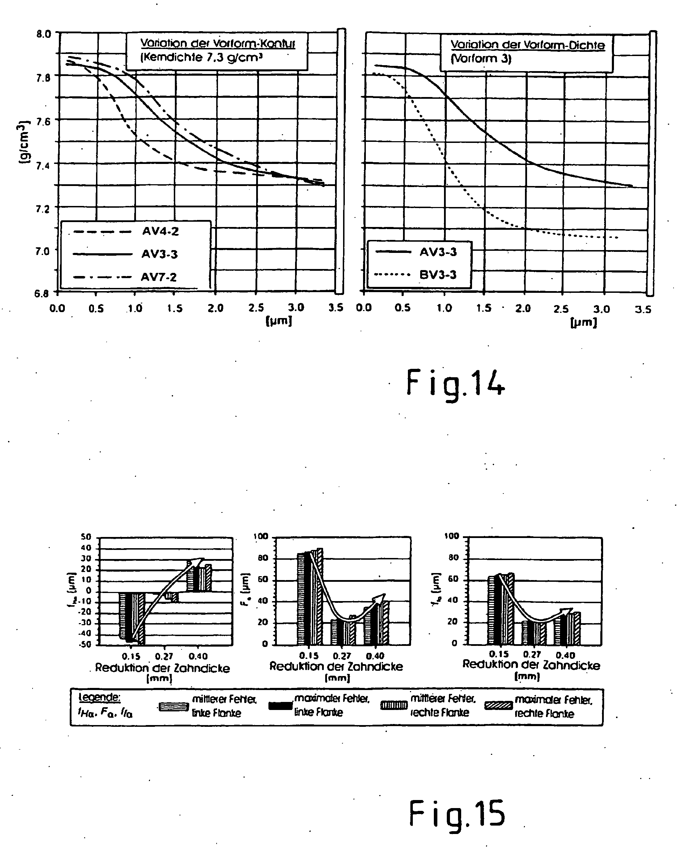

Fig. 14 zeigt eine Ansicht von Dichteverläufen in Abhängigkeit von verschiedenen Ausgangsdichten der verwendeten Vorformen. Wird die Dichte der Vorform in ihrem Kern wie auch im Verlauf nach außen hin verändert, ergeben sich Beeinflussungen betreffend des Oberflächenverdichtungsverlaufes. Dieses geht aus der rechten Abbildung der Fig. 14 hervor. Durch Veränderungen der jeweiligen Vorform lässt sich ebenfalls der Dichteverlauf nach einer Oberflächenverdichtung stark beeinflussen. Daher stellen die Ausgangskerndichte wie auch die Gestalt der Vorform wichtige Parameter bei der Iteration und Berechnung dar.

Fig. 15 gibt einen beispielhaften Überblick über die ermittelten Fehler, die bei unterschiedlichen Oberflächenverdichtungsschritten auftreten und das Materialverhalten mitcharakterisieren. Der Fehler wird in Fehlerklassen gemäß DIN 3962 bzw. DIN 3960 angegeben. Ein wichtiger Punkt bei der Ermittlung einer geeigneten Oberflächenverdichtung durch Abwälzen ist die Profiländerung des abrollenden Werkzeugs. Durch Anwendung des obigen Berechnungsverfahrens für die Vorform und das Walzwerkzeug ist es möglich, auf Basis der ermittelten Ergebnisse das Walzwerkzeug zu modifizieren. Dieses wird in Fig. 15 an einer Vorform mit einer Kerndichte von 7,3 g/cm³ dargestellt, die in Eingriff mit einem nicht modifizierten Satz an Walzwerkzeugen stand und oberflächenverdichtet wurde. In Abhängigkeit von einer Vorschubbewegung des Walzwerkzeuges ändert sich die Geometrie des Zahnrades. Ziel ist es, die angestrebte Endkontur zu erreichen, wie sie vorgegeben ist. Aus den Abbildungen der Fig. 15 sind verschiedene Zustände für unterschiedlich weite Vorschubbewegungen zu entnehmen. Exemplarisch sind links der Profilwinkelfehler, in der Mitte der vollständige Profilformfehler und rechts der Formfehler dargestellt. Gemessen wurden diese an dem jeweils hergestellten Zahnrad. So führt zum Beispiel eine Zahndickenreduktion von 0,27 mm zu einer Profilwinkelabweichung entsprechend der Klasse 7 nach DIN. Um eine notwendige Endform der Zahndickenreduktion zu erreichen, ist aber ein Vorschub um 0,4 mm notwendig. Dieses führt aber zu einem Ansteigen der jeweiligen Fehler. Das bedeutet, dass die gefertigte Endkontur in den anderen Werten außerhalb der notwendigen Güteklassen zu liegen kommt. Daher wird eine Veränderung der Geometrie des Werkzeugs notwendig. Unter Berücksichtigung der aufgefundenen Werte als Eingangswerte lässt sich sodann ein neues Werkzeug bestimmen, wieder die Tests durchführen und auf diese Weise iterativ eine optimierte Geometrie für das Werkzeug bestimmen. Durch die Berechnung wird es ermöglicht, mit beispielsweise zwei oder auch nur einer Iteration eine endgültige Kontur für das Werkzeug bestimmen zu können.

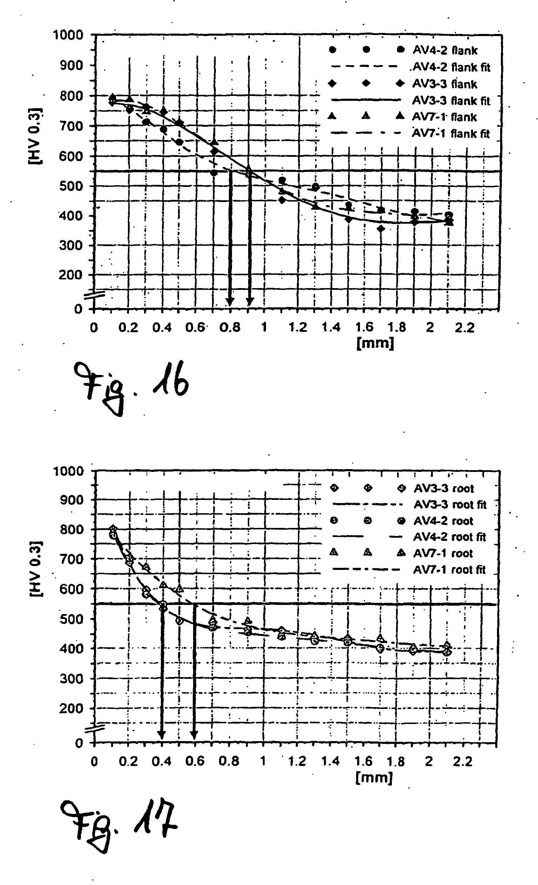

Fig. 16zeigt einen Härteverlauf in HV auf einer Flanke einer Verzahnung aufgetragen über die Distanz von der Oberfläche auf der x-Achse in [mm]. Bei verschiedenen Oberflächenverdichtungsschritten kann durch geeignete Aufmaßwahl wie auch Vorschubbewegung der Profilverlauf der Härte beeinflusst werden. Beispielsweise kann der Verlauf zumindest teilweise konvex oder auch konkav sein. Wie angegeben, hat die mit AVA7-1 bezeichnete Vorform ein größeres Aufmaß besessen als die mit AVA4-2 bezeichnete Vorform. Beide weisen einen entgegengesetzten Verlauf der Härten auf: während im ersten Teil bis zum Erreichen von 550 HVAVA7-1 eine eher konvexe Form aufweist, hat AVA4-2 eine eher konkaven Verlauf. Nach Unterschreiten von 550HV ändert sich dieses.

Fig. 17 einen Härteverlauf in HV in einem Fußbereich einer Verzahnung bei verschiedenen Oberflächenverdichtungsschritten. Aufgrund des dortigen geringeren Aufmaßes im Vergleich zum Flankenaufmaß sowie aufgrund der Geometrie ergibt sich ein anderer Härteverlauf. Die Härte fällt anfangs steiler ab, geht dann jedoch annähernd in einen geraden Verlauf mit einer nur noch geringen Neigung über.

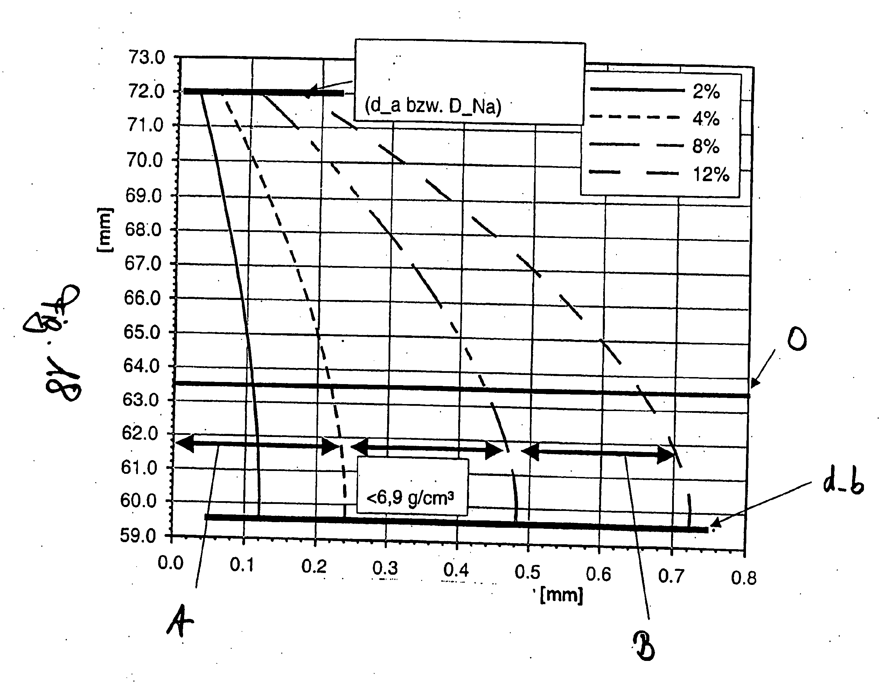

Fig. 18zeigt eine schematische Ansicht von verschiedenen berechneten Aufmassverläufen für verschiedene Dichten auf Basis einer Endzahndicke. Auf der y-Achse ist der Durchmesser aufgetragen. Auf der x-Achse ist das Aufmaß angegeben. D_a bzw. d_a gibt den Kopfnutzkreisdurchmesser bzw. den Kopfkreisdurchmesser an, 0 ist eine Vorgabe eines Aufmasses zum Beispiel durch einen Wert am Teilkreis, d_b ist der Grundkreisdurchmesser. A gibt den Bereich bevorzugter Werte für den Wälzkreisbereich an. B gibt einen kritischen Bereich wieder, da dort schon Werkstoffversagen beim Walzen auftreten kann.

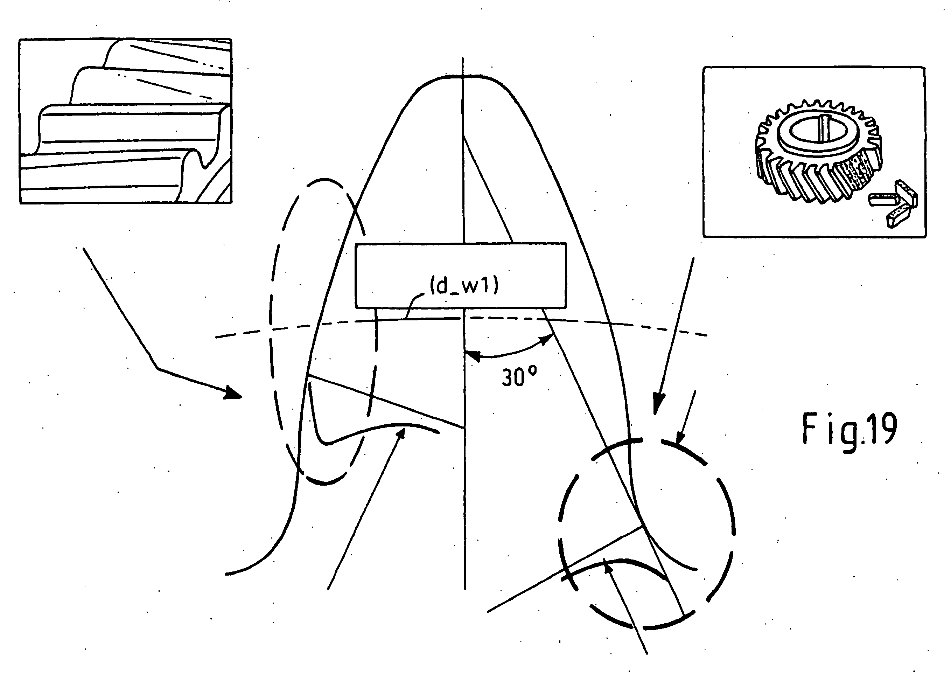

Fig. 19 zeigt eine schematische Darstellung von Parametern, die in die iterative Berechnung eingehen können. Insbesondere können dieses Orte der maximalen Beanspruchung sein. Wie im linken Foto dargestellt, können auf der Flanke Pittingschäden auftreten. Daher wird vorzugsweise ein Vergleichsspannungsverlauf herangezogen, bei dem gift: eine maximale Spannung tritt unterhalb der Oberfläche auf, insbesondere im Bereich eines negativen Schlupfes, daher bevorzugt unterhalb des angegebenen Wälzkreisdurchmessers d_w1. Das rechte Foto gibt einen Zahnbruch aufgrund überhöhter Biegelast an. Daraus folgt für das Berechnungsmodell, dass ein Ort der maximalen Zahnfußbeanspruchung ermittelt und berücksichtigt wird. Dieser kann beispielsweise über die 30°-Tangente nach DIN oder über die Lewis-Parabel nach AGMA ermittelt werden. Für die Vergleichsspannung wird vorzugsweise angenommen, dass eine maximale Spannung and er Oberfläche auftritt.

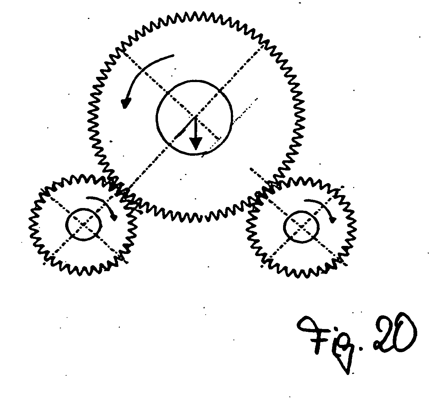

Fig. 20 zeigt in schematischer Ansicht eine weitere Möglichkeit, wie beispielsweise gleichzeitig zumindest zwei Vorformen verdichtet werden können. Neben der Bewegung des Werkzeugs kann gemäß einer Ausgestaltung auch eine Bewegung der Vorformen in Richtung des Werkzeuges erfolgen. Darüber hinaus besteht die Möglichkeit, das auf einer Vorformachse zwei oder mehr Vorformen angeordnet werden.

Die Erfindung kann beispielsweise eingesetzt werden bei Nockenwellenzahnrädern, bei Planetenzahnrädern, bei Sonnenzahnrädern, bei Antriebszahnrädem, bei Ausgleichszahnrädern, bei Getriebezahnrädern, bei Kupplungszahnrädern, bei Pumpenzahnrädern, bei geradverzahnten Zahnrädern, bei schrägverzahnten Zahnrädern, bei Elektromotoren, bei Verbrennungskraftmaschinen, bei Verstellgetrieben, bei Außen- oder Innenverzahnungen, bei Außen- oder Innenstimradgetrieben mit Gerad- oder Schrägverzahnung, bei Kegelradgetrieben mit Gerad-, Schräg- oder Bogenverzahnung, bei Schraubenradgetrieben oder Schneckengetrieben wie auch bei Steilgewindewelle- und Steilgewinde-Nabeverbindungen. Eine weitere Ausgestaltung sieht vor, dass ein Zahnrad aus Sintermetall. Das andere kann beispielsweise aus Kunststoff oder einem anderen Material sein. Des Weiteren besteht die Möglichkeit, dass zumindest eines der beiden Zahnräder eine Beschichtung aufweist, die insbesondere geräuschminimierend wirkt. Vorzugsweise kann auch ein Kegelschraubradpaar erstellt werden, um dadurch ein Hypoidgetriebe zu bilden. Insbesondere sind die Werkstücke mir Verzahnung in der Automobiltechnik, in der Motorentechnik, in der Getriebetechnik, bei Stelleinrichtungen, in kraftübertragenden Vorrichtungen, bei Spielzeugen, bei feinmechanischen Vorrichtungen, bei Haushaltsgeräten, insbesondere mobilen Haushaltsgeräte, und anderem einsetzbar.

## Patentansprüche

1. Verfahren zur Herstellung eines oberflächenverdichteten metallenen Verzahnungselementes aufweisend ein verdichtetes Sintermaterial mit einer jeweils unterschiedlich verdichteten Randschicht entlang einer Flanke und eines Zahngrundes; wobei eine Vorform (106) des Verzahnungselementes mit einem lokal selektiven unterschiedlichen Aufmaß (207; 308; 309; 407; 501; 601; 602; 603; 701) entlang einer Flanke und eines Zahngrundes der Vorform bezogen auf ein Endmaß des Verzahnungselementes hergestellt wird und mittels wenigstens eines Walzwerkzeuges (101; 110) auf das Endmaß gewalzt wird, wobei das Verzahnungselement zumindest im Bereich wenigstens einer Flanke (705; 706) und eines Fußes (704) eines Zahnes des Verzahnungselementes zur Erzeugung einer verdichteten Randschicht (209) an einer Oberfläche lokal variiert verdichtet wird, wobei im Zahngrundbereich das Aufmaß so gewählt wird, dass es ein lokales Minimum aufweist.

2. Verfahren nach Anspruch 1, **dadurch gekennzeichnet, dass** über ein unterschiedliches Aufmaß (207; 308; 309; 407; 502; 601; 602; 603; 701) entlang einer Flanke der Vorform (106) die jeweils unterschiedlich verdichtete Randschicht (209) erzeugt wird.

3. Verfahren nach Anspruch 1 oder 2, **dadurch gekennzeichnet, dass** ein Aufmaß (207; 308; 309; 407; 502; 601; 602; 603; 701) auf einer ersten Flanke (306) des Zahns anders gewählt wird als auf einer zweiten Flanke (307) des Zahns (201; 301; 401).

4. Verfahren nach Anspruch 3, **dadurch gekennzeichnet, dass** ein Unterschied im Aufmass an den Flanken eines Zahnes auf gleicher Höhe in Abhängigkeit von Festigkeitsanforderungen ermittelt werden.

5. Verfahren nach einem der vorhergehenden Ansprüche, **dadurch gekennzeichnet, dass** in einem Zahngrund (704) ein asymmetrisches Aufmaß (207; 308; 309; 407; 502; 601; 602; 603; 701) gewählt wird.

6. Verfahren nach einem der vorhergehenden Ansprüche, **dadurch gekennzeichnet,**
**dass** zumindest 10 µm unterhalb einer Oberfläche einer ersten Flanke (306) des Zahns eine um 2% bis zumindest 15% höhere Dichte als auf einer zweiten Flanke (307) des Zahns auf gleicher Höhe erzeugt wird.

7. Verfahren nach einem der vorhergehenden Ansprüche, **dadurch gekennzeichnet, dass** ein Betrag eines maximalen lokalen Aufmaßes (207; 308; 309; 407; 502; 601; 602; 603; 701) wenigstens 20 µm, bevorzugt wenigstens 50 µm und insbesondere maximal 500 µm beträgt.

8. Verfahren nach einem der vorhergehenden Ansprüche, **dadurch gekennzeichnet, dass** ein negatives Aufmaß (207; 308; 309; 407; 502; 601; 602; 603; 701) vorgesehen wird, das lokal unter dem Endmaß liegt.

9. Verfahren nach einem der vorhergehenden Ansprüche, **dadurch gekennzeichnet, dass** ein lokales Aufmaß (207; 308; 309; 407; 502; 601; 602; 603; 701) auf einer ersten Flanke (306) des Zahns um zumindest 10% größer gewählt wird als ein Aufmaß auf einer zweiten Flanke (307) des Zahns auf gleicher Höhe.

10. Verfahren nach einem der vorhergehenden Ansprüche, **dadurch gekennzeichnet, dass** die Vorform (106) und das Walzwerkzeug (101; 110) aufeinander abgewälzt werden, bis eine evolventische Bewegung zwischen dem dadurch hergestellten Verzahnungselement und dem Walzwerkzeug (101; 110) erzeugt wird.

11. Verfahren nach einem der vorhergehenden Ansprüche, **dadurch gekennzeichnet, dass** mittels Walkbewegung zwischen der Vorform (106) und dem Wahwerkzeug (101; 110) eine zykloldenförmige Verzahnung entsteht.

12. Verfahren nach einem der vorhergehenden Ansprüche, **dadurch gekennzeichnet, dass** es einen Härtungsprozeß, insbesondere einen thermischen und/oder chemischen Oberflächenhärtungsprozess umfasst.

13. Verfahren nach einem der vorhergehenden Ansprüche, **dadurch gekennzeichnet, dass** es die Schritte Verpressen, Sintern, Oberftächenverdichtungswalzen sowie Härtung umfasst.

14. Verwendung einer Vorform in einem Verfahren nach Anspruch 1, **dadurch gekennzeichnet, dass** eine erste (306) und eine zweite Flanke (307) eines Zahns jeweils voneinander abweichende Aufmaße (207; 308; 309; 407; 502; 601; 602; 603; 701) aufweisen, wobei in einem Zahngrundbereich das Aufmaß ein lokales Minimum aufweist.

15. Verwendung nach Anspruch 14, **dadurch gekennzeichnet, dass** ein Aufmass auf der ersten und/oder zweiten Flanke (306, 307) asymmetrisch angeordnet ist.

16. Verwendung nach Anspruch 14 oder 15, **dadurch gekennzeichnet, dass** ein negatives Aufmaß (207; 308; 309; 407; 502; 601; 602; 603; 701) vorgesehen ist, das lokal unter einem Endmaß liegt.

17. Verzahnungselement, hergestellt mit einem Verfahren gemäß einem der Anspruche 1 bis 13, mit einem metallischen Sinterwerkstoff, **dadurch gekennzeichnet, dass** das Verzahnungselement zumindest im Bereich wenigstens einer Flanke (306; 307) und eines Fußes (704) eines Zahnes des Verzahnungselementes eine lokal variierte Verdichtung (209) aufweist und eine Tiefe einer verdichteten Randschicht im Fußbereich geringer ist als auf einer Zahnflanke.

18. Verzahnungselement nach ein Anspruch 17, **dadurch gekennzeichnet, dass** das Verzahnungselement ein geradverzahntes Zahnrad ist.

19. Verzahnungselement nach Anspruch 17, **dadurch gekennzeichnet, dass** das Verzahnungselement ein schrägverzahntes Zahnrad ist.

20. Verzahnungselement nach einem der vorhergehenden Ansprüche 17 bis 19. **dadurch gekennzeichnet, dass** einander gegenüberliegende Flanken (306; 307) von Zähnen eine asymmetrische Verdichtung (209) aufweisen.

21. Verzahnungselement nach einem der vorhergehenden Anspruche 17 bis 20, **dadurch gekennzeichnet, dass** eine asymmetrische Verdichtung (209) in einem Fußbereich (704) vorliegt.

22. Verzahnungselement nach einem der vorhergehenden Ansprüche 17 bis 21, **dadurch gekennzeichnet dass** ein Eisenwerkstoff als Hauptbestandteil des Sinterwerkstoffes und jeweils wenigstens ein Legierungsbestandteil aus der Gruppe Kohlenstoff, Molybdän, Nickel, Kupfer, Mangan, Chrom und Vanadium ausgewählt ist.

23. Verzahnungselement nach einem der vorhergehenden Ansprüche 17 bis 21, **dadurch gekennzeichnet, dass** Hauptbestandteil des Sinterwerkstoffes Aluminium oder Magnesium ist.

24. Verzahnungselement nach einem der vorhergehenden Ansprüche 17 bis 23. **dadurch gekennzeichnet, dass** es mit einem weiteren funktionalen Bauteil, insbesondere einer Welle oder einem weiteren Zahnrad, versintert ist.

25. Verzahnungselement nach einem der vorhergehenden Ansprüche 17 bis 24, **dadurch gekennzeichnet, dass** es Bestandteil einer Pumpe ist.

## Claims

1. Method of producing a surface-compacted metal toothed element comprising a compacted sintering material with a differently compacted peripheral layer along a flank and a tooth root respectively, whereby a preform (106) of the toothed element with a locally selective different oversize profile (207; 308; 309; 407; 501; 601; 602; 603; 701)along a flank and a tooth root of the preform relative to a final size of the toothed element is produced and rolled to the final size by means of at least one rolling die (101; 110), and the toothed element is compacted in a locally varied manner at least in the region of at least one flank (705; 706) and a root (704) of a tooth of the toothed element in order to produce a compacted peripheral layer (209) at a surface, and the oversize profile in the tooth root region is selected so that it comprises a local minimum.

2. Method as claimed in claim 1, **characterised in that** the respective differently compacted peripheral layer (209) is produced by means of a different oversize profile (207; 308; 309; 407; 502; 601; 602; 603; 701) along a flank of the preform (106).

3. Method as claimed in claim 1 or 2, **characterised in that** an oversize profile (207; 308; 309; 407; 502; 601; 602; 603; 701) on a first flank (306) of the tooth is selected so that it is different from that on a second flank (307) of the tooth (201; 301; 401).

4. Method as claimed in claim 3, **characterised in that** a difference in the oversize profile on the flanks of a tooth at the same level is determined as a function of strength requirements.

5. Method as claimed in one of the preceding claims, **characterised in that** an asymmetrical oversize profile (207; 308; 309; 407; 502; 601; 602; 603; 701) is selected in a tooth root (704).

6. Method as claimed in one of the preceding claims, **characterised in that** at least 10 µm below a surface of a first flank (306) of the tooth a density is produced that is 2% to at least 15% higher than on a second flank (307) of the tooth at the same level.

7. Method as claimed in one of the preceding claims, **characterised in that** a size of a maximum local oversize profile (207; 308; 309; 407; 502; 601; 602; 603; 701) is at least 20 µm, preferably at least 50 µm and in particular at most 500 µm.

8. Method as claimed in one of the preceding claims, **characterised in that** a negative oversize profile (207; 308; 309; 407; 502; 601; 602; 603; 701) is provided which locally lies below the final size.

9. Method as claimed in one of the preceding claims, **characterised in that** a local oversize profile (207; 308; 309; 407; 502; 601; 602; 603; 701) on a first flank (306) of the tooth is selected so that it is at least 10% bigger than an oversize profile on a second flank (307) of the tooth at the same level.

10. Method as claimed in one of the preceding claims, **characterised in that** the preform (106) and the rolling die (101; 110) are rolled towards one another until an involute movement is generated between the toothed element produced as a result and the rolling die (101; 110).

11. Method as claimed in one of the preceding claims, **characterised in that** a cycloid-shaped toothing is produced by means of the rolling movement between the preform (106) and the rolling die (101; 110).

12. Method as claimed in one of the preceding claims, **characterised in that** it comprises a hardening process, in particular a thermal and/or chemical surface-hardening process.

13. Method as claimed in one of the preceding claims, **characterised in that** it comprises the steps of pressing, sintering, surface-compaction rolling and hardening.

14. Use of a preform for a method as claimed in claim 1, **characterised in that** a first (306) and a second flank (307) of a tooth each have different oversize profiles (207; 308; 309; 407; 502; 601; 602; 603; 701) from one another, and an oversize profile in a tooth root region comprises a local minimum.

15. Use as claimed in claim 14, **characterised in that** an oversize profile on the first and/or second flank (306, 307) is disposed asymmetrically.

16. Use as claimed in claim 14 or 15, **characterised in that** a negative oversize profile (207; 308; 309; 407; 502; 601; 602; 603; 701) is provided, which locally is below a final size.

17. Toothed element produced by means of a metallic sintering material by a method as claimed in one of claims 1 to 13, **characterised in that** the toothed element has a locally varied compaction (209) at least in the region of at least one flank (306; 307) and a root (704) of a tooth of the toothed element, and a compacted peripheral layer in the root region is of a lesser depth than on a tooth flank.

18. Toothed element as claimed in claim 17, **characterised in that** the toothed element is a straight-toothed gear.

19. Toothed element as claimed in claim 17, **characterised in that** the toothed element is a helically toothed gear.

20. Toothed element as claimed in one of preceding claims 17 to 19, **characterised in that** mutually opposing flanks (306; 307) of teeth have an asymmetrical compaction (209).

21. Toothed element as claimed in one of preceding claims 17 to 20, **characterised in that** an asymmetrical compaction (209) is provided in a root region (704).

22. Toothed element as claimed in one of preceding claims 17 to 21, **characterised in that** a ferrous material is selected as the main constituent of the sintering material and at least one alloying element is selected from the group comprising carbon, molybdenum, nickel, copper, manganese, chromium and vanadium.

23. Toothed element as claimed in one of preceding claims 17 to 21, **characterised in that** the main constituent of the sintering material is aluminium or magnesium.

24. Toothed element as claimed in one of preceding claims 17 to 23, **characterised in that** it is sintered with another functional component, in particular a shaft or another gear.

25. Toothed element as claimed in one of preceding claims 17 to 24, **characterised in that** it is a component of a pump.

26. Use of a device with a stored computer programme product with programme code means which are stored on a computer-readable medium in the production of an at least partially surface-hardened toothed element when implementing a method as claimed in one of claims 1 to 13, with a tool controller adapted to a different oversize profile (207; 308; 309; 407; 502; 601; 602; 603; 701) of a flank (306; 307) and a root (704) with a local oversize profile minimum in a tooth root region, having an input for appropriate co-ordinates and motion sequences for compacting the preform.

27. Use of a device as claimed in claim 26 for producing an at least partially surface hardened toothed element from a preform (106) made from a sintering material at least in a surface region, which device comprises a tool which has a compensation of different oversize profiles (207; 308; 309; 407; 502; 601; 602; 603; 701) at a first (306) and a second flank (307) of a tooth of the preform (106) to be compacted by means of a rolling movement.

28. Use of a preform in a method as claimed in claim 1, **characterised in that** a differently compacted peripheral layer is produced by means of a different oversize profile along a flank and a tooth root of the preform, and the oversize profile has a local minimum in a tooth root region.

## Revendications

1. Procédé de fabrication d'un élément de denture métallique à surface compactée comprenant un matériau fritté compacté, ayant une couche de surface à chaque fois compactée différemment le long d'un flanc et d'une base de dent, une préforme (106) de l'élément de denture qui présente une dimension différente localement sélective (207 ; 308 ; 309 ; 407 ; 501 ; 601 ; 602 ; 603 ; 701) le long d'un flanc et d'une base de dent de la préforme par rapport à une dimension finale de l'élément de denture étant fabriquée et laminée au moyen d'au moins un outil à cylindre (101 ; 110) à la dimension finale, l'élément de denture étant compacté de manière variée localement au moins dans la zone d'au moins un flanc (705 ; 706) et d'un fond (704) d'une dent de l'élément de denture pour la formation d'une couche de surface compactée (209) sur une surface, la dimension étant choisie de manière à présenter un minimum local dans la zone de base de dent.

2. Procédé selon la revendication 1, **caractérisé en ce que** la couche de surface (209) à chaque fois compactée différemment est formée par une dimension différente (207 ; 308 ; 309 ; 407 ; 502 ; 601 ; 602 ; 603 ; 701) le long d'un flanc de la préforme (106).

3. Procédé selon la revendication 1 ou 2, **caractérisé en ce qu'**une dimension (207 ; 308 ; 309 ; 407 ; 502 ; 601 ; 602 ; 603 ; 701) sur un premier flanc (306) de la dent est choisie différemment de sur un second flanc (307) de la dent (201 ; 301 ; 401).

4. Procédé selon la revendication 3, **caractérisé en ce qu'**une différence de dimension sur les flancs d'une dent à la même hauteur est déterminée en fonction des exigences de solidité.

5. Procédé selon l'une quelconque des revendications précédentes, **caractérisé en ce qu'**une dimension asymétrique (207 ; 308 ; 309 ; 407 ; 502 ; 601 ; 602 ; 603 ; 701) est choisie dans une base de dent (704).

6. Procédé selon l'une quelconque des revendications précédentes, **caractérisé en ce qu'**au moins 10 µm en dessous d'une surface d'un premier flanc (306) de la dent, une densité supérieure de 2 % à au moins 15 % à celle sur un second flanc (307) de la dent à la même hauteur est formée.

7. Procédé selon l'une quelconque des revendications précédentes, **caractérisé en ce qu'**un montant d'une dimension locale maximale (207 ; 308 ; 309 ; 407 ; 502 ; 601 ; 602 ; 603 ; 701) est d'au moins 20 µm, de préférence d'au moins 50 µm et notamment d'au plus 500 µm.

8. Procédé selon l'une quelconque des revendications précédentes, **caractérisé en ce qu'**une dimension négative (207 ; 308 ; 309 ; 407 ; 502 ; 601 ; 602 ; 603 ; 701) est prévue, qui est localement inférieure à la dimension finale.

9. Procédé selon l'une quelconque des revendications précédentes, **caractérisé en ce qu'**une dimension locale (207 ; 308 ; 309 ; 407 ; 502 ; 601 ; 602 ; 603 ; 701) sur un premier flanc (306) de la dent est choisie au moins 10 % plus grande qu'une dimension sur un second flanc (307) de la dent à la même hauteur.

10. Procédé selon l'une quelconque des revendications précédentes, **caractérisé en ce que** la préforme (106) et l'outil à cylindre (101 ; 110) sont laminés l'un sur l'autre jusqu'à ce qu'un mouvement d'involution soit généré entre l'élément de denture ainsi fabriqué et l'outil à cylindre (101 ; 110).

11. Procédé selon l'une quelconque des revendications précédentes, **caractérisé en ce qu'**une denture cycloïdale est formée au moyen d'un mouvement du cylindre entre la préforme (106) et l'outil à cylindre (101 ; 110).

12. Procédé selon l'une quelconque des revendications précédentes, **caractérisé en ce qu'**il comprend un procédé de durcissement, notamment un procédé de durcissement de surface thermique et/ou chimique.

13. Procédé selon l'une quelconque des revendications précédentes, **caractérisé en ce qu'**il comprend les étapes de compression, frittage, laminage de compactage en surface et durcissement.

14. Utilisation d'une préforme dans un procédé selon la revendication 1, **caractérisée en ce qu'**un premier (306) et un second flanc (307) d'une dent présentent respectivement des dimensions différentes l'une de l'autre (207 ; 308 ; 309 ; 407 ; 502 ; 601 ; 602 ; 603 ; 701), la dimension présentant un minimum local dans une zone de base de dent.

15. Utilisation selon la revendication 14, **caractérisée en ce qu'**une dimension sur le premier et/ou le second flanc (306, 307) est agencée de manière asymétrique.

16. Utilisation selon la revendication 14 ou 15, **caractérisée en ce qu'**une dimension négative (207 ; 308 ; 309 ; 407 ; 502 ; 601 ; 602 ; 603 ; 701) est prévue, qui est localement inférieure à une dimension finale.

17. Élément de denture, fabriqué avec une préforme selon l'une quelconque des revendications 1 à 13, comprenant un matériau fritté métallique, **caractérisé en ce que** l'élément de denture présente un compactage varié localement (209) au moins dans la zone d'au moins un flanc (306 ; 307) et d'un fond (704) d'une dent de l'élément de denture et une profondeur d'une couche de surface compactée dans la zone de fond est plus faible que sur un flanc de dent.

18. Élément de denture selon la revendication 17, **caractérisé en ce que** l'élément de denture est une roue dentée à denture droite.

19. Élément de denture selon la revendication 17, **caractérisé en ce que** l'élément de denture est une roue dentée à denture hélicoïdale.

20. Élément de denture selon l'une quelconque des revendications 17 à 19 précédentes, **caractérisé en ce que** des flancs opposés (306 ; 307) de dents présentent un compactage asymétrique (209).

21. Élément de denture selon l'une quelconque des revendications 17 à 20 précédentes, **caractérisé en ce qu'**un compactage asymétrique (209) est présent dans une zone de fond (704).

22. Élément de denture selon l'une quelconque des revendications 17 à 21 précédentes, **caractérisé en ce qu'**un matériau à base de fer est choisi en tant que constituant principal du matériau fritté et à chaque fois au moins un constituant d'alliage du groupe constitué par le carbone, le molybdène, le nickel, le cuivre, le manganèse, le chrome et le vanadium.

23. Élément de denture selon l'une quelconque des revendications 17 à 21 précédentes, **caractérisé en ce que** le constituant principal du matériau fritté est l'aluminium ou le magnésium.

24. Élément de denture selon l'une quelconque des revendications 17 à 23 précédentes, **caractérisé en ce qu'**il est fritté avec un composant fonctionnel supplémentaire, notamment un arbre ou une autre roue dentée.

25. Élément de denture selon l'une quelconque des revendications 17 à 24 précédentes, **caractérisé en ce qu'**il s'agit d'un constituant d'une pompe.

26. Utilisation d'un dispositif lors de la fabrication d'un élément de denture à surface au moins partiellement durcie, comprenant un produit programme informatique enregistré qui comprend des moyens de code de programme pour un procédé selon l'une quelconque des revendication 1 à 13, qui sont stockés sur un support lisible par ordinateur, lors de la réalisation d'un procédé selon l'une quelconque des revendications 1 à 13 avec une commande d'outil adaptée à une dimension différente (207 ; 308 ; 309 ; 407 ; 502 ; 601 ; 602 ; 603 ; 701) d'un flanc (306 ; 307) et d'un fond (704) avec un minimum de dimension local dans la zone de base de dent, avec une entrée de coordonnées et séries de mouvements appropriées pour le compactage de la préforme.

27. Utilisation d'un dispositif selon la revendication 26 pour la fabrication d'un élément de denture à surface au moins partiellement durcie à partir d'une préforme (106) constituée d'un matériau fritté au moins dans une zone de surface, le dispositif comprenant un outil qui présente une compensation de dimensions différentes (207 ; 308 ; 309 ; 407 ; 502 ; 601 ; 602 ; 603 ; 701) sur un premier (306) et un second flanc (307) d'une dent de la préforme (106) à compacter par un mouvement de laminage.

28. Utilisation d'une préforme dans un procédé selon la revendication 1, **caractérisée en ce qu'**une couche de surface à chaque fois compactée différemment est formée par une dimension différente le long d'un flanc et d'une base de dent de la préforme, la dimension présentant un minimum local dans une zone de base de dent.
